# EUROPEAN PATENT APPLICATION

(11) **EP 4 604 577 A1**
(43) Date of publication of application: **20.08.2025**
(21) Application number: 24157566.1
(22) Date of filing: 14.02.2024
(51) Int. Cl.: H04R 25/00, G06F 21/30, G06F 21/44, G06F 21/57, G06F 21/62, G06F 21/73, H04L 9/40, H04W 12/06, H04W 12/069, H04W 12/08, H04W 12/106, G06F 8/65, H04L 9/32

(54) **HEARING DEVICE WITH RE-CONFIGURATION AND RELATED METHODS**

(71) Applicant: GN Hearing A/S, 2750 Ballerup (DK)
(72) Inventor: VENDELBO, Allan Munk, DK-2750 Ballerup (DK)
(74) Representative: Aera A/S

(57) **Abstract**

A hearing device is disclosed. The hearing device comprising a processing unit optionally configured to compensate for hearing loss of a user of the hearing device, and a memory unit, the memory unit has stored therein: a first primary certificate optionally comprising a first primary hearing device identifier; a second primary certificate optionally comprising a second primary hearing device identifier; and a first secondary certificate optionally comprising a hearing device configuration indicative of a first configuration of the hearing device or a second configuration of the hearing device. The processing unit is configured to operate, in accordance with the hearing device configuration indicating the first configuration, the hearing device according to the first primary certificate. The processing unit may be configured to operate, in accordance with the hearing device configuration indicating the second configuration, the hearing device according to the second primary certificate.

## Description

The present disclosure relates to a hearing device and related methods including a method of operating a hearing device.

### BACKGROUND

Secure communication within a hearing system has gained increased attention in recent years and wireless communication to and from different entities of a hearing system has been increasing in continuation of the developments within wireless communication technology. However, the new technologies entail new challenges for the hearing device manufacturers to secure communication in a hearing system. Wireless communication interfaces of a hearing system desirably use an open standard-based interface. However, this poses many challenges in terms of security.

While securing communication between entities, there is also a desire to allow third parties also denoted OEM customers to control their own hearing devices and/or reuse one or more parts of the manufacturer's security schemes of the security architecture.

### SUMMARY

There is a need for the ability to re-configure a hearing device which has been under the control of an OEM customer to be under the control of the manufacturer or another OEM customer in an efficient manner. For example, the re-configuration avoids having to manufacturer a new hearing device, and allows for re-purposing a hearing device that has been previously under the control of an OEM customer.

Accordingly, there is a need for hearing devices and methods with improved re-configuration method while maintaining high security level in the communication between entities of the hearing system.

A hearing device is disclosed. The hearing device comprising a processing unit optionally configured to compensate for hearing loss of a user of the hearing device, and a memory unit. the memory unit has stored therein: a first primary certificate optionally comprising a first primary hearing device identifier; a second primary certificate optionally comprising a second primary hearing device identifier; and a first secondary certificate optionally comprising a hearing device configuration indicative of a first configuration of the hearing device or a second configuration of the hearing device. The processing unit is configured to operate, in accordance with the hearing device configuration indicating the first configuration, the hearing device according to the first primary certificate. The processing unit may be configured to operate, in accordance with the hearing device configuration indicating the second configuration, the hearing device according to the second primary certificate.

Further, a method for operating a hearing device comprising a processing unit optionally configured to compensate for hearing loss of a user of the hearing device; and a memory unit. The memory unit has stored therein: a first primary certificate optionally comprising a first primary hearing device identifier; a second primary certificate optionally comprising a second primary hearing device identifier; and a first secondary certificate optionally comprising a hearing device configuration indicative of a first configuration of the hearing device or a second configuration of the hearing device. The method comprises determining if the hearing device is configured to operate in the first configuration or the second configuration. The method comprises in accordance with a determination that the hearing device is configured to operate using the first configuration, operating the hearing device according to the first primary certificate. The method optionally comprises in accordance with a determination that the hearing device is configured to operate using the second configuration, operating the hearing device according to the second primary certificate.

It is an advantage of the present disclosure that the hearing device manufacturer can reconfigure hearing devices that were earlier enabled and/or configured as customer hearing devices, i.e. which hearing devices are sold/used as OEM devices and the security functionality of such customer hearing devices. Further, the hearing device manufacturer can reconfigure hearing devices from being for a first OEM customer to a second OEM customer or for the hearing device manufacturer, while allowing for separate and different cryptographic material to be used for different OEM customers and for the hearing device manufacturer. In other words, the disclosed technique allows, inter alia, a secure re-purposing and/or re-configuring of a hearing device.

Advantageously, the present disclosure allows the reconfiguration to provide full control of the model of the hearing device reconfigured to a new controller: a different OEM customer or the hearing device manufacturer. The new legitimate controller can be seen as the entity for which the hearing device is reconfigured, such as re-purposed.

Even further, the present disclosure enables the reconfigured hearing device to securely be fitted and remotely fitted via Remote Fine Tuning by the new legitimate controller.

Also, the new legitimate controller may advantageously implement and run their own OS version if requested.

In general, the present disclosure provides a high degree of security in the hearing device communication while allowing a high degree of flexibility in the control of access to the hearing device.

Advantageously, the present disclosure reduces or removes the requirement for building customized firmware for third parties due to the security architecture. Further, the disclosed technique may allow the manufacturer to rely on one type of hardware for various purposes (e.g. OEM customer devices for different OEMs, manufacturer devices) as the hearing device can be configured and reconfigured accordingly.

The method and apparatus as disclosed provides a scalable security architecture for manufacturing a hearing device with improved security. The hearing device disclosed herein advantageously verifies integrity of received data, detecting any alteration and disregard altered data for e.g. maintenance, fitting session, and/or remote tuning. The disclosed hearing devices and methods for operating the hearing device supports a hearing device in combatting attacks such as unauthorized access or control of a hearing device, while still allowing access to legitimate parties such as the hearing device manufacturer and an OEM customer, for e.g. fitting purposes, update purposes, maintenance purposes. Further, time-consuming and tedious rebuild and reverification of firmware can be reduced or eliminated.

Further, a method for reconfiguring a hearing device is disclosed. The method may be performed by a server device. The method comprises updating a hearing device configuration of a first secondary certificate. The method comprises digitally signing the first secondary certificate with first primary private key, and optionally transmitting the digitally signed first secondary certificate.

It is an advantage of the method for reconfiguration that hearing devices can be re-purposed. This avoids the hearing device manufacturer having to manufacture further hearing devices, or further hearing devices with specific hardware type for a specific OEM, but this also avoids the need of having many different types of hearing devices (e.g. hearing devices hardware) on stock for e.g. service and/or repair and/or sale. Further, the disclosed method allows an immediate and secure reconfiguration of the hearing device to provide full control to a new legitimate controller, e.g. a different OEM customer, or the hearing device manufacturer.

The reconfigured hearing device is then capable of secure communication, e.g. verifying integrity of received data, detecting any alteration and disregard altered data for e.g. maintenance, fitting session, and/or remote tuning. The disclosed method for reconfiguration provides a hearing device capable of combatting attacks such as unauthorized access or control of a hearing device, while still allowing access to legitimate parties such as the hearing device manufacturer and an OEM customer, for e.g. fitting purposes, update purposes, maintenance purposes.

### BRIEF DESCRIPTION OF THE DRAWINGS

The above and other features and advantages of the present invention will become readily apparent to those skilled in the art by the following detailed description of exemplary embodiments thereof with reference to the attached drawings, in which:
Fig. 1 schematically illustrates architecture of a hearing system according to this disclosure,
Fig. 2 shows exemplary hearing devices,
Fig. 3 shows exemplary certificates stored in memory of a hearing device,
Figs. 4A-4B show a flow diagram of an exemplary method according to the disclosure, and
Fig. 5 is a flow diagram of an exemplary method according to the disclosure.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

It is an object of the present disclosure is to provide hearing device(s), and method(s) which seeks to mitigate, alleviate, or eliminate one or more of the above-identified deficiencies in the art and disadvantages singly or in any combination.

The present disclosure relates to improved security of a hearing device and/or improved security in communication between a hearing device and entities of a hearing system. Security comprises assessing threats, vulnerabilities and attacks and developing appropriate safeguards and countermeasures to protect against threats and attacks. The present disclosure relates to a hearing device comprising a processing unit optionally configured to compensate for hearing loss of a user of the hearing device.

A hearing device is disclosed. The hearing device may be configured to be worn at an ear of a user and may be a hearable or a hearing aid, wherein the processor is configured to compensate for a hearing loss of a user.

The hearing device may be a hearable. The hearing device may be a hearing aid.

The hearing device may be of the behind-the-ear (BTE) type, in-the-ear (ITE) type, in-the-canal (ITC) type, receiver-in-canal (RIC) type or receiver-in-the-ear (RITE) type. The hearing aid may be a binaural hearing aid. The hearing device may comprise a first earpiece and a second earpiece, wherein the first earpiece and/or the second earpiece is an earpiece as disclosed herein.

The hearing device may be configured for wireless communication, e.g. via the interface, with one or more devices, such as with another hearing device, e.g. as part of a binaural hearing system, and/or with one or more accessory devices, such as a smartphone and/or a smart watch. The interface may comprise a wireless transceiver, e.g. configured for wireless communication at frequencies in the range from 2.4 to 2.5 GHz.

The interface of the hearing device optionally comprises one or more antennas for converting one or more wireless input signals, e.g. a first wireless input signal and/or a second wireless input signal, to antenna output signal(s). The wireless input signal(s) may origin from external source(s), such as spouse microphone device(s), wireless TV audio transmitter, and/or a distributed microphone array associated with a wireless transmitter. The wireless input signal(s) may origin from another hearing device, e.g. as part of a binaural hearing system, and/or from one or more accessory devices, such as a smartphone, tablet device, and/or a smartwatch.

The interface of the hearing device optionally comprises a radio transceiver coupled to the antenna(s) for converting the antenna output signal(s) to a transceiver input signal. Wireless signals from different external sources may be multiplexed in the radio transceiver to a transceiver input signal or provided as separate transceiver input signals on separate transceiver output terminals of the radio transceiver. The transceiver input signal optionally comprises a first transceiver input signal representative of the first wireless signal from a first external source.

The hearing device optionally comprises a set of microphones. The set of microphones may comprise one or more microphones. The set of microphones comprises a first microphone for provision of a first microphone input signal and/or a second microphone for provision of a second microphone input signal. The set of microphones may comprise N microphones for provision of N microphone signals, wherein N is an integer in the range from 1 to 10. In one or more exemplary hearing devices, the number N of microphones is two, three, four, five or more. The set of microphones may comprise a third microphone for provision of a third microphone input signal.

The hearing device optionally comprises a pre-processing unit. The pre-processing unit may be connected to the radio transceiver for pre-processing the transceiver input signal. The pre-processing unit may be connected to the first microphone for pre-processing the first microphone input signal. The pre-processing unit may be connected the second microphone if present for pre-processing the second microphone input signal. The pre-processing unit may comprise one or more A/D-converters for converting analog microphone input signal(s) to digital pre-processed microphone input signal(s).

The hearing device comprises a processing unit for processing input signals, such as microphone input signal(s), transceiver input signal, pre-processed transceiver input signal and/or pre-processed microphone input signal(s). The processing unit provides an electrical output signal based on the input signals to the processing unit. Input terminal(s) of the processing unit are optionally connected to respective output terminals of the pre-processing unit. For example, a transceiver input terminal of the processor may be connected to a transceiver output terminal of the pre-processing unit. One or more microphone input terminals of the processor may be connected to respective one or more microphone output terminals of the pre-processing unit.

The hearing device comprises a memory unit. The memory unit may include removable and non-removable data storage units including, but not limited to, Read Only Memory (ROM), Random Access Memory (RAM), etc. The memory unit may be separated in a plurality of memory parts, such as two, three or more memory parts. The memory unit may comprise a first memory part. The first memory part may be a writable memory part. The memory unit may comprise a second memory part. The second memory part may be a locked or protected memory part, such as a non-writable memory part. The memory unit may have a certificate stored at a memory address of the memory unit, and/or in memory cells of the memory unit, such as in designated memory cells and/or at designated addresses.

It is noted that descriptions and features of hearing device functionality, such as hearing device configured to, also apply to methods and vice versa. For example, a description of a hearing device configured to determine also applies to a method, e.g. of operating a hearing device, wherein the method comprises determining and vice versa.

A hearing device comprising a memory unit having one or more certificates, such as one or more first certificates and/or one or more second certificates, stored therein is disclosed.

The first certificate(s) may be used for communication with one or more first entities, such as a first server device, a first client/fitting device, and/or an accessory device with a first user application installed thereon.

The second certificate(s) may be used for communication with one or more second entities also denoted third-party entities, such as a second server device, a second client/fitting device, and/or an accessory device with a second user application installed thereon.

Having first and second certificates stored in the memory unit allows a hearing device manufacturer to control a domain of operation of a hearing device, e.g. selecting a new legitimate controller for a hearing device, e.g. during a reconfiguration of the hearing device.

In other words, the one or more first certificates and the one or more second certificates stored on the memory unit can be used to operate hearing devices in a first domain, e.g. under the manufacturers control using first certificates (for communication with first entities) and to sell hearing devices (OEM hearing devices) to a third party or OEM customer. Having first and second certificates stored in the memory unit allows the manufacturer to permit a third party (OEM customer) to operate hearing devices in a second domain, e.g. under the third party's control using second certificates (for communication with second entities). Thus, the third party can control and/or operate the customer hearing devices (OEM hearing devices) using the second certificate(s) and/or first certificates depending on the desired functionalities and control of the customer hearing device. Operating the hearing device in the first domain relies on a first security architecture, e.g. at least partly defined by, or based on first certificate(s). Operating the hearing device in the second domain relies on a second security architecture. The second security architecture is optionally defined by or based on second certificate(s) and/or first certificates. In other words, the first domain may depend on first certificates and be independent on second certificates, while the second domain may depend on first certificate(s) and second certificate(s).

In some examples, the one or more first certificates comprise a first primary certificate and/or a first secondary certificate.

In some examples, the one or more second certificates comprise a second primary certificate and/or a second secondary certificate.

In the present disclosure, the term "certificate" refers to a data structure that enables verification of its origin and content, such as verifying the legitimacy and/or authenticity of its origin and content. The certificate is configured to provide a content that is associated to a holder of the certificate by an issuer of the certificate. The certificate optionally comprises keying material, such as one or more keys, and/or a signature, so that a recipient of the certificate is able to verify or authenticate the certificate content and origin. The certificate permits thus to achieve authentication of origin and content, non-repudiation, and/or integrity protection. The certificate may further comprise a validity period, one or more algorithm parameters, and/or an issuer. A certificate may comprise a digital certificate, a public key certificate, an attribute certificate, and/or an authorization certificate. Examples of certificates are X.509 certificates, and Secure/Multipurpose Internet Mail Extensions, S/MIME, certificates, and/or Transport Layer Security, TLS, certificates.

A certificate may comprise a certificate type identifier. The certificate type identifier may indicate a type of the certificate amongst a variety of certificate types. The certificate type identifier may be used by the hearing device to identify what type of certificate the hearing device receives, stores, authenticates and/or retrieves. A certificate may comprise a version identifier indicative of a data format version of the certificate. The hearing device may use the certificate type identifier and/or the version identifier to determine what type of data the certificate comprises and/or what type of data is comprised in a field of the certificate. For example, the hearing device may determine based on the certificate type identifier and/or version identifier what field of the certificate comprises a digital signature and/or which public key is needed to verify the digital signature of the certificate. It may be envisaged that there is a one-to-one mapping between the certificate type identifier and the public-private key pair.

A certificate may comprise a signing device identifier. The signing device identifier refers to a unique identifier identifying the device that has signed the certificate, such as a manufacturing device, e.g. an integrated circuit card, a smart card, a hardware security module. The signing device identifier may for example comprise a medium access control, MAC, address of the signing device and/or a serial number of the signing device. The signing device identifier may allow for example the hearing device to determine whether the signing device is e.g. black-listed or not, and thus to reject certificates signed by a signing device that has been black-listed, e.g. due to theft or other corruption.

A certificate may comprise one or more hardware identifiers. A hardware identifier may identify a piece of hardware comprised in the hearing device, such as a radio chip comprised in the hearing device and/or a digital signal processor (processing unit) of the hearing device. The hardware identifier(s) may be stored in a register (regarded as comprised in second memory parti of memory unit) of the piece of hardware comprised in the hearing device during manufacturing of the piece of hardware. The hardware identifier may comprise a serial number of the hardware, a chip identifier, or any combination thereof. The hearing device receiving or retrieving from the memory unit a certificate comprising the hardware identifier may verify the certificate by comparing the stored hardware identifier and the corresponding hardware identifier comprised in the certificate. Such verification may be performed upon reception of the certificate, and/or upon retrieval of the certificate from the memory unit, such as at boot or power-on of the hearing device.

A certificate may comprise one or more client device type authorization identifiers. A client device type may comprise a model, category, or type of client devices, such as a tablet product model, category or type, a USB dongle product model, category, or type. A client device type authorization identifier is an identifier of an authorized client device type, such as an identifier of the client device types that the hearing device may authorize or accept for communication, such as for fitting. For example, the client device type authorization identifier is in one or more hearing devices a bit-field indicative of the type(s) of client device the hearing device should allow for fitting.

A certificate may comprise a token parameter. The token parameter may indicate whether a token-based authentication between the hearing device and a client device is to be enabled or not. For example, if the token parameter is set to 0, token-based authentication of client devices is not to be enabled by the hearing device and the hearing device is to use for example a combination of client device type identifier and/or a client device identifier (such as a serial number) to perform an authentication of the client device. If for example the token parameter is set to 1, token-based authentication of client devices is to be enabled by the hearing device, i.e. the hearing device authenticates the client device based on a token received from the client device. The hearing device may also derive a session-specific token based on the received token parameter which is used to e.g. accept the connection to the client device without user intervention.

A certificate may comprise one or more of a hardware platform identifier, a software platform identifier, and/or a certificate timestamp. The hardware platform identifier may identify a hardware platform, such as an operational hearing device hardware platform, i.e. a hardware platform compatible with the hearing device certificate. The software platform identifier may identify one or a family of software platforms on which the certificate is configured to operate. The certificate timestamp refers to a timestamp of production or manufacture of the certificate, such as a timestamp of the manufacturing device indicating a time instant when the certificate is generated. The certificate timestamp may be in form of e.g.: hour, min, date, month, year. The hearing device may subsequently perform version control and revocation using the hardware platform identifier, the software platform identifier, and/or the certificate timestamp.

A certificate may comprise a signature also denoted digital signature. The digital signature enables a proof or verification of authenticity of the certificate, such as verification of the signer legitimacy. The hearing device may be configured to verify digital signature(s) when determining if the certificate comprising the digital signature is valid, e.g. at start-up or booting of the hearing device and/or when receiving the certificate. A digital signature of a certificate is verifiable by the hearing device e.g. using a corresponding public key, e.g. stored in another certificate and/or in a locked part of the memory unit. If the digital signature is not successfully verified using the alleged public key, the hearing device may disregard the certificate and/or forgo/abort normal operation of the hearing device or operation according to one or more certificates. This may provide the advantage that the hearing device rejects a certificate that is tampered or received from unauthenticated parties. The communication with the hearing device may thus be robust against impersonation, modification, and masquerading attacks and/or misuse of a hearing device. In the present disclosure, to abort/aborting normal operation of the hearing device may comprise one or more of to enter a service mode, a repair mode, or a reboot mode. To abort/aborting normal operation of the hearing device may comprise forgo compensating for hearing loss of the user and/or switch the hearing device off. To abort/aborting normal operation of the hearing device may comprise to enter a software update mode.

The present disclosure provides a hearing device comprising a memory unit, wherein the memory unit may have stored thereon a first primary certificate optionally comprising a first primary hearing device identifier. The memory unit may have stored thereon a second primary certificate optionally comprising a second primary hearing device identifier.

Further, the memory unit optionally has stored therein a first secondary certificate comprising a hearing device configuration indicative of a first configuration of the hearing device or a second configuration of the hearing device.

In one or more exemplary hearing devices and/or methods, the first primary certificate is different from the second primary certificate. For example, a first primary keyset of the first primary certificate may be different from a second primary keyset of the second primary certificate and/or a first secondary keyset of the first primary certificate may be different from a second secondary keyset of the second primary certificate.

In one or more exemplary hearing devices and/or methods, the first primary certificate is different from the first secondary certificate.

A configuration (such as the first configuration and/or the second configuration) can be seen as information indicating if the hearing device is to operate as a customer hearing device for a first OEM customer or for a second OEM customer different than the first OEM customer, and/or if the hearing device is to operate as a manufacturer hearing device.. In the present context, a customer hearing device is a hearing device at least partly controlled and sold to a user by a third party (OEM customer), i.e. the manufacturer of the hearing device is an original equipment manufacturer (OEM) that has sold the hearing device to a third party selling the hearing device under the third party's own brand.

The hearing device comprises a processing unit. The processing unit is optionally configured to operate, in accordance with the hearing device configuration indicating the first configuration, the hearing device according to the first primary certificate. For example, the processing unit is configured to, when the hearing device configuration indicates the first configuration, operate the hearing device according to the first primary certificate and/or forgo to operate the hearing device according to the second primary certificate. For example, when the hearing device configuration indicates the first configuration, the processing unit is configured to operate the hearing device, as manufacturer hearing device, according to the first primary certificate.

The processing unit is optionally configured to operate, in accordance with the hearing device configuration indicating the second configuration, the hearing device according to the second primary certificate. For example, the processing unit is optionally configured to operate the hearing device as a customer hearing device based on the hearing device configuration indicating the second configuration. The hearing device may be configured to operate as a customer hearing device for a given OEM customer when the hearing device configuration indicates the second configuration.

In one or more example hearing devices, in the first configuration, the hearing device is configured to operate as a manufacturer hearing device based on the first primary certificate.

In one or more example hearing devices, in the second configuration, the hearing device is configured to operate as a customer hearing device based on the second primary certificate.

The present disclosure allows updating, changing, modifying the configuration of the hearing device to provide control to a new legitimate controller, e.g. for a new domain.

As used herein the term "identifier" refers to a piece of data that is used for identifying, such as for categorizing, and/or uniquely identifying. The identifier may be in a form of a word, a number, a letter, a symbol, a list, an array, or any combination thereof. For example, the identifier as a number may be in the form of an integer, such as unsigned integer, uint, with a length of e.g. 8 bits, 16 bits, 32 bits, etc., such as an array of unsigned integers. A key identifier may indicate or identify a key to be used as keying material for securing a communication with an external party, such as with a client device, accessory device and/or server device. A key identifier of a keyset may indicate a key or keys that are part of the keyset. The number of key identifiers of a keyset may correspond to the number of keys in the keyset, i.e. each key may have a corresponding key identifier in the keyset. A key identifier of a keyset may point to and/or identify a key amongst a plurality of keys in the keyset.

In one or more example hearing devices, the hearing device configuration comprises a first secondary customer identifier indicative of a customer.

In one or more example hearing devices, the hearing device configuration comprises a first secondary hearing device identifier and/or a first secondary Bluetooth identifier (e.g. a Bluetooth Low Energy, BLE, identifier). In some examples, the first secondary hearing device identifier can be seen as a hardware identifier, e.g. first secondary hardware identifier.

In some examples, the first secondary certificate comprises one or more of: a first secondary customer identifier indicative of a customer, a first secondary hearing device identifier, and a first secondary Bluetooth identifier. In one or more exemplary hearing devices, the hearing device configuration comprises one or more BLE identifiers, such as a first secondary BLE identifier, and/or one or more customer identifiers indicative of a customer. A BLE identifier is the Bluetooth address of the hearing device. The one or more customer identifiers of the customer data may comprise one or more, such as all, of a first secondary customer identifier, a second primary customer identifier, a second secondary customer identifier, and a second tertiary customer identifier. A customer identifier may comprise a first value and optionally a second value.

In one or more exemplary hearing devices/methods, the memory unit has stored therein the first secondary certificate comprising the first secondary customer identifier and/or a first secondary BLE identifier. The processing unit is optionally configured to determine if the hearing device is configured to operate as a customer hearing device based on hearing device configuration included in the first secondary certificate. In other words, to determine, based on the hearing device configuration (included in the first secondary certificate), if the hearing device is configured to operate as any of :a first customer hearing device, a second customer hearing device, and a manufacturer hearing device.

In one or more example hearing devices, the processing unit is configured to determine if the hearing device configuration indicates the first configuration or the second configuration. For example, the hearing device configuration comprises a Bluetooth identifier, a first secondary hearing device identifier and/or a first secondary customer identifier, any of the Bluetooth identifier, the first secondary hearing device identifier and the first secondary customer identifier indicates if the hearing device is to be operated according to a first configuration and/or a second configuration. In other words, any of the Bluetooth identifier, the first secondary hearing device identifier and the first secondary customer identifier can be checked by the processing unit, e.g. by checking a database, and/or a lookup table, providing an association between any of the Bluetooth identifier, the first secondary hearing device identifier and the first secondary customer identifier, and a legitimate controller of the hearing device (such as a given OEM customer, or a manufacturer). For example, the processing unit may be configured to query a look up table or database stored in a server device part of the manufacturer system.

In one or more example hearing devices, the processing unit is configured to determine if the hearing device configuration indicates the first configuration or the second configuration by verifying a first secondary Bluetooth identifier of the hearing device configuration. For example, the first secondary Bluetooth identifier can be pre-set to a value reserved for an OEM customer hearing device and provided in a database or look up table to be checked by the processing unit. For example, the first secondary Bluetooth identifier can be pre-set to a value reserved for manufacturer hearing devices and provided in a database or look up table to be checked by the processing unit.

In one or more example hearing devices, the processing unit is configured to abort configuration (e.g. reconfiguration) in accordance with the hearing device configuration does not indicate the first configuration nor the second configuration. For example, when the hearing device configuration does not indicate the first configuration nor the second configuration, the processing unit does not boot to normal mode, but to a service mode that does not offer any processing of sounds like normal mode. For example, in service mode, the processing unit is configured to permit access for service/repair, e.g. to reconfigure the hearing device.

In one or more example hearing devices, the processing unit is configured to determine if the hearing device configuration indicates the first configuration or the second configuration by determining if the first secondary certificate is valid. The verification of the validity of the first secondary certificate is for example performed before operating according to any of the first and second configuration.

In one or more example hearing devices, the processing unit is configured to, in accordance with a determination that the first secondary certificate is not valid, disregard the first secondary certificate, and optionally abort the process, and optionally enter service mode. In one or more exemplary hearing devices, aborting the process may comprise aborting normal hearing device operation or putting the hearing device in a repair mode or service mode.

In one or more example hearing devices, determining if the first secondary certificate is valid comprises verifying a signature of the first secondary certificate. For example, the first secondary certificate is not valid if the signature of the first secondary certificate is not verified. The first secondary certificate may be verified using a first secondary certificate key, e.g. stored in a second memory part of the memory unit. The first secondary certificate key may be used as the first model key. Thus, the first secondary certificate key may be referred to as the first model key. In other words, the first model key may be stored in the second part of the memory unit, not necessarily as part of a certificate. The hearing device may be configured to verify the first model certificate with the first model key and wherein to operate the hearing device according to the second model information data is conditioned on a successful verification of the first model certificate. or first secondary certificate.

In one or more example hearing devices, determining if the first secondary certificate is valid comprises comparing the first secondary customer identifier with a second primary customer identifier of the second primary certificate, and wherein the first secondary certificate is not valid if the first secondary customer identifier is different from the second primary customer identifier of second primary certificate. For example, when the first secondary certificate comprises a first secondary customer identifier, the first secondary customer identifier is compared with a second primary customer identifier of the second primary certificate, and wherein the first secondary certificate is not valid if the first secondary customer identifier is different from the second primary customer identifier of second primary certificate.

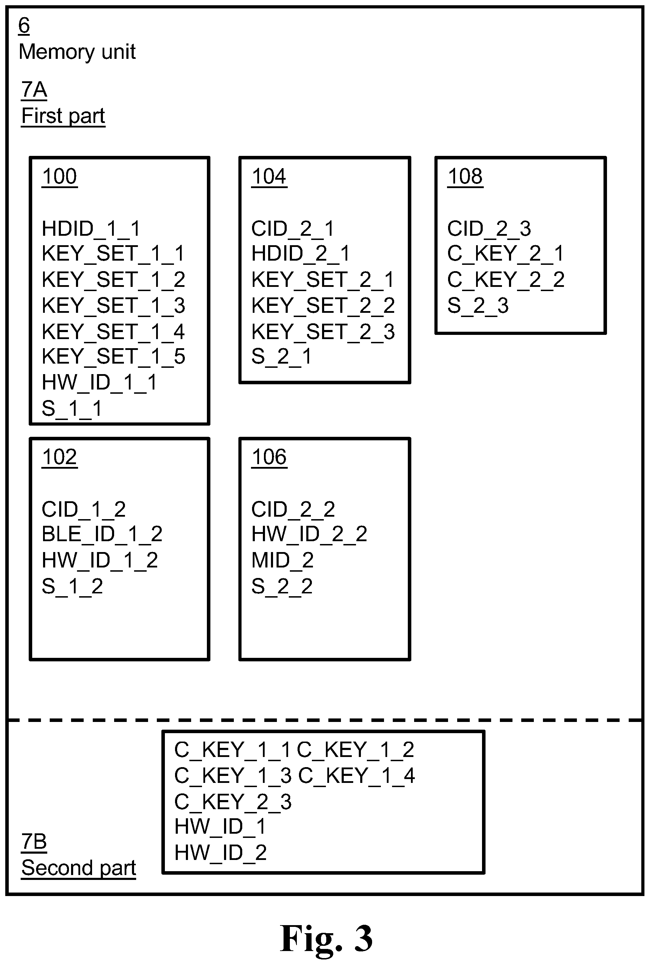

In one or more example hearing devices, determining if the first secondary certificate is valid comprises comparing the first secondary hearing device identifier and a first hearing device identifier stored in a separate part of the memory unit, and wherein the first secondary certificate is not valid if the first secondary hearing device identifier is different from the first hearing device identifier. For example the first second hearing device identifier is compared to the first hearing device identifier (e.g. comparing HW_ID_1_2 to HW_ID_1 of Fig. 3) stored in a second part of the memory unit.

In one or more example hearing devices, the processing unit is configured to update firmware based on the first configuration or the second configuration, e.g. when the first secondary certificate is determined to be valid.

In one or more exemplary hearing devices/methods, the memory unit has stored therein a second key certificate comprising a second model key. The second secondary certificate key may be used as the second model key. Thus, the second secondary certificate key may be referred to as the second model key. In other words, the second model key may be comprised in the second tertiary certificate, the second tertiary certificate thus being the second key certificate. The hearing device may be configured to verify the second model certificate with the second model key and wherein to operate the hearing device according to the second model information data is conditioned on a successful verification of the second model certificate.

In one or more exemplary hearing devices/methods, the second key certificate comprises a second tertiary customer identifier. In one or more exemplary hearing devices, to verify the second model data comprises to determine if the second model customer identifier corresponds to, matches, or is the same as the second tertiary customer identifier. In one or more exemplary hearing devices, the verification of the second model data is successful or at least partly successful when the second model customer identifier corresponds to, matches, or is the same as the second tertiary customer identifier.

The present disclosure provides a hearing device, wherein the memory unit has stored therein a first primary certificate optionally comprising a first primary hearing device identifier.

The memory unit has stored therein a second primary certificate optionally comprising a second primary hearing device identifier and second key data for third-party control of the hearing device. The second key data optionally comprises one or more second keysets including a second primary keyset. The processing unit is configured to verify the second primary certificate, e.g. based on the first primary hearing device identifier and the second primary hearing device identifier and/or based on a second primary signature of the second primary certificate. The processing unit is optionally configured to, in accordance with a successful verification of the second primary certificate, communicate with a third-party entity, such as one or more second entities, based on the second key data.

In one or more exemplary hearing devices, the second primary keyset is a fitting device keyset configured to secure communication with a fitting device being the third-party entity. Thus, the second primary keyset may be used for communication with a second client/tablet/fitting/dispenser device and/or a fitting application installed and running on the second tablet/fitting/dispenser device, such as a tablet, a portable computer, or a stationary computer, wherein the tablet/fitting/dispenser device and/or a fitting application is optionally controlled by the OEM customer or third party. The second primary keyset may form part of a second configuration.

In one or more exemplary hearing devices, the one or more second key sets include a second secondary keyset.

In one or more exemplary hearing devices, the second secondary keyset is a third-party server keyset configured to secure communication with a third-party server, also denoted second server device, being the third-party entity. Thus, the second secondary keyset may be used for communication with a second server device (third-party server), e.g. controlled by the OEM customer/third party. In other words, the second secondary keyset may be an OEM server/cloud keyset also denoted a third-party server keyset, e.g. configured to secure communication with a third-party server being the third-party entity. The second secondary keyset may form part of a second configuration. In one or more exemplary hearing devices, the hearing device operating in the second configuration may be configured to communicate with a third-party entity based on the second key data by verifying communication data based on the second primary keyset and/or the second secondary keyset depending on whether the hearing device communicates with a third party fitting device and/or a third party server.

In one or more exemplary hearing devices, to communicate with a third-party entity based on the second key data, such as based on the second primary keyset, comprises to receive, and store one or more hearing device parameters such as one or more of gain settings, program settings, filter coefficients, or other hearing device settings corresponding to the second configuration, from a second client/tablet/fitting/dispenser device. In other words, the third party or OEM customer may be allowed to implement and run an own fitting device for fitting the hearing device. In one or more exemplary hearing devices, the hearing device operating in the second configuration may be configured to communicate with a third-party entity based on the second key data, such as based on the second secondary keyset, by applying a third-party operating system in the processing unit. To apply a third-party operating system in the processing unit comprises one or more of to run, deploy, install, operate according to, and store in memory unit. In other words, the third party or OEM customer may be allowed to implement and run an own operating system on the hearing device.

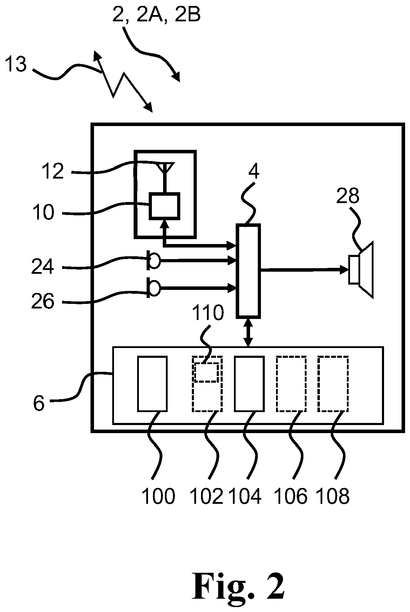

The present disclosure provides a method for operating a hearing device. The method may be performed by the hearing device, such as the hearing device disclosed herein, such as hearing device 2 of Fig. 2. The hearing device comprises a memory unit, wherein the memory unit has stored therein: a first primary certificate comprising a first primary hearing device identifier; and a second primary certificate comprising a second primary hearing device identifier; and optionally a first secondary certificate comprising a hearing device configuration indicative of a first configuration of the hearing device or a second configuration of the hearing device.

The method comprises determining if the hearing device is configured to operate in the first configuration or the second configuration.

The method comprises operating the hearing device according to the first primary certificate in accordance with a determination that the hearing device is configured to operate using the first configuration. The method comprises operating the hearing device according to the second primary certificate in accordance with a determination that the hearing device is configured to operate using the second configuration.

In one or more example methods, the hearing device configuration comprises a first secondary customer identifier indicative of a customer. In one or more example methods, the hearing device configuration comprises a first secondary hearing device identifier and/or a first secondary Bluetooth identifier.

In one or more example methods, the method comprises determining if the hearing device configuration indicates the first configuration or the second configuration.

In one or more example methods, determining if the hearing device configuration indicates the first configuration or the second configuration comprising verifying a first secondary Bluetooth identifier of the hearing device configuration.

In one or more example methods, the method comprises aborting configuration in accordance with the hearing device configuration does not indicate the first configuration nor the second configuration.

In one or more example methods, in the first configuration, the hearing device is configured to operate as a manufacturer hearing device based on the first primary certificate.

In one or more example methods, in the second configuration, the hearing device is configured to operate as a customer hearing device based on the second primary certificate.

In one or more example methods, the method comprises determining if the first secondary certificate is valid.

In one or more example methods, in accordance with a determination that the first secondary certificate is not valid, the method comprises disregarding the first secondary certificate.

In one or more example methods, determining if the first secondary certificate is valid comprises verifying a signature of the first secondary certificate.

In one or more example methods, the first secondary certificate is not valid if the signature of the first secondary certificate is not verified.

In one or more example methods, the first secondary certificate comprises a first secondary customer identifier.

In one or more example methods, determining if the first secondary certificate is valid comprises comparing the first secondary customer identifier with a second primary customer identifier of the second primary certificate.

In one or more example methods, the first secondary certificate is not valid if the first secondary customer identifier is different from the second primary customer identifier of second primary certificate.

In one or more example methods, determining if the first secondary certificate is valid comprises comparing the first secondary hearing device identifier and a first hearing device identifier stored in a separate part of the memory unit.

In one or more example methods, the first secondary certificate is not valid if the first secondary hearing device identifier is different from the first hearing device identifier.

In one or more example methods, the method comprises updating firmware based on the first configuration or the second configuration. For example, the firmware may be updated to use the first primary certificate or the second primary certificate. For example, the firmware may be updated to use the second primary certificate whenever the hearing device configuration indicates the second configuration for an OEM customer device in e.g. the first secondary BLE identifier in the first secondary certificate. With this implementation, for example, the firmware image can be the same for OEM customer hearing devices and manufacturer hearing device. This is a benefit regarding the verification effort required.

In one or more exemplary methods, setting up a connection to an accessory device/second user application comprises obtaining a session key. In one or more exemplary methods, setting up a connection to an accessory device/second user application comprises encrypting the session key with the second primary key of the second primary keyset to obtain an encrypted session key. In one or more exemplary methods, setting up a connection to an accessory device comprises transmitting the encrypted session key to the accessory device.

The present disclosure provides a method for operating a hearing device, such as a hearing disclosed herein, such as hearing device 2A of Fig. 2. The memory unit has stored therein a first primary customer device identifier, such as first secondary hardware identifier HW_1_2. In one or more exemplary methods, the memory unit has stored therein a first model certificate, such as first secondary certificate 102, comprising a first customer identifier, such as CID_1_2.

In one or more exemplary methods, the memory unit has stored therein second model data comprising a second model customer identifier, and second model information data indicative of one or more available models for the hearing device. The method comprises verifying the second model data and may comprise operating the hearing device according to the second model information data, e.g. upon successful verification of the second model data.

In one or more exemplary methods, the method comprises aborting normal hearing device operation, e.g. entering a service mode or repair mode and/or forgoing compensating for hearing loss of the user and/or switching the hearing device off, in accordance with failure in verifying the first secondary certificate or the second primary certificate, such as in accordance with failure in verifying one or more of first secondary signature, first secondary hearing device identifier, first secondary customer identifier, first secondary Bluetooth identifier, second primary signature, second hearing device identifier, and second primary customer identifier.

In one or more exemplary methods, the method optionally comprises forgoing communicating with the third-party entity, in accordance with failure in verifying communication data, e.g. comprising forgoing communicating with the third-party entity in accordance with failure in verifying communication data based on the second primary keyset and/or forgoing communicating with the third-party entity in accordance with failure in verifying communication data based on the second secondary keyset.

Forgoing communicating with the third-party entity may comprise entering a service mode or repair mode and/or forgoing compensating for hearing loss of the user and/or switching the hearing device off. Thus, forgoing communicating with the third-party entity may comprise aborting normal hearing device operation of the hearing device.

The memory unit may have a first primary certificate stored therein. In other words, the memory unit may comprise a first primary certificate. The first primary certificate may comprise a first primary signature also denoted S_1_1 being a digital signature.

The first primary certificate may comprise a first primary hearing device identifier also denoted HDID_1_1.

The first primary certificate may comprise one or more, such as a plurality of, keysets including a first primary keyset and optionally a first secondary keyset. Keysets of the first primary certificate may be used for communication with devices/applications controlled by the manufacturer of the hearing device, e.g. in a first domain and/or a second domain. The use of first keyset(s) in the second domain depends on the desired degree of control from the OEM customer. For example, the OEM customer may desire to have control of the second user application (e.g. via second primary keyset) while using the manufacturers backbone architecture (first server device and/or first client/fitting device). The manufacturer of the hearing device may be an original equipment manufacturer (OEM).

The first primary keyset may be used for communication with an accessory device and/or a first user application installed and running on the accessory device, such as a smartphone, e.g. an accessory device and/or a first user application controlled by the hearing device manufacturer.

The first secondary keyset may be used for communication with a first tablet/fitting/dispenser device and/or a fitting application installed and running on the tablet/fitting/dispenser device, such as a tablet, a portable computer, or a stationary computer. The first tablet/fitting/dispenser device may be controlled by the hearing device manufacturer.

In the present disclosure, a keyset refers to a set of keys, e.g. used for securing communication between the hearing device and external devices, such as server device(s), client/fitting devices, and/or accessory device(s). A keyset comprises one or more keys, such as one, two, three, four, or more keys, and optionally a key identifier or a set of key identifiers.

A keyset may comprise or consist of a number of different keys. The number of keys in a keyset may be in the range from three to ten. A keyset consisting of three to six keys and one or more key identifiers may be advantageous given the limited memory size and the desire to provide enough keys for enabling future operation of the hearing device without requiring a tedious and time-consuming update of certificate(s).

As used herein, the term "key" refers to a cryptographic key, i.e. a piece of data, (e.g. a string, a parameter) that determines a functional output of a cryptographic algorithm. For example, during encryption, the key allows a transformation of a plaintext into a cipher-text and vice versa during decryption. The key may also be used to verify a digital signature and/or a message authentication code, MAC. A key is so called a symmetric key when the same key is used for both encryption and decryption. In asymmetric cryptography or public key cryptography, a keying material is a key pair, so called a private-public key pair comprising a public key and a private key. In an asymmetric or public key cryptosystem (such as Rivest Shamir Adelman, RSA, cryptosystem, or Elliptic curve cryptography, ECC), the public key is used for encryption and/or signature verification while the private key is used for decryption and/or signature generation.

The first primary keyset may comprise a plurality of keys, such as two, three, four, or more keys, and optionally a key identifier. In one or more exemplary hearing devices/methods, the first primary keyset, also denoted KEY_SET_1_1, comprises four keys KEY_1_1_1, KEY_1_1_2, KEY_1_1_3, and KEY_1_1_4. The first primary keyset optionally comprises a first primary key identifier, also denoted KEY_ID_1_1. For example, the first primary key identifier KEY_ID_1_1 having the value of "5" may indicate that the first primary keyset/first primary certificate includes a first primary key KEY_1_1_1 with identifier "5", and optionally increments of the key identifier, such as first primary key KEY_1_1_2 with key identifier "6", first primary key KEY_1_1_3 with key identifier "7", and/or first primary key KEY_1_1_4 with key identifier "8".

The first secondary keyset may comprise a plurality of keys, such as two, three, four, or more keys, and optionally a key identifier. In one or more exemplary hearing devices/methods, the first secondary keyset, also denoted KEY_SET_1_2, comprises four keys KEY_1_2_1, KEY_1_2_2, KEY_1_2_3, and KEY_1_2_4. The first secondary keyset optionally comprises a first secondary key identifier, also denoted KEY _ID_1_2.

The first primary certificate may comprise a first tertiary keyset. The first tertiary keyset may comprise a plurality of keys, such as two, three, four, or more keys, and optionally a key identifier. In one or more exemplary hearing devices/methods, the first tertiary keyset, also denoted KEY_SET_1_3, comprises four keys KEY_1_3_1, KEY_1_3_2, KEY_1_3_3, and KEY_1_3_4. The first tertiary keyset optionally comprises a first tertiary key identifier, also denoted KEY_ID_1_3.

The first tertiary keyset may be used for communication with a first server device such as a manufacturer server device. In other words, the first server device may be controlled by the hearing device manufacturer.

The first primary certificate may comprise a first quaternary keyset. The first primary certificate may comprise a first quinary keyset.

The first primary certificate may comprise a first primary hardware identifier. The first primary hardware identifier may be used for determining if the first primary certificate is valid, e.g. by comparing the first primary hardware identifier with a second hardware identifier, e.g. stored in the second part of the memory unit.

A hardware identifier may identify a piece of hardware comprised in the hearing device, such as a radio chip comprised in the hearing device and/or a digital signal processor of the hearing device. The hardware identifier(s) may be stored in a register of the piece of hardware comprised in the hearing device during manufacturing of the piece of hardware. The hardware identifier may comprise a serial number of the hardware, a chip identifier, or any combination thereof. The hearing device receiving or retrieving from the memory unit a certificate comprising the hardware identifier may verify the certificate by comparing its stored hardware identifier and the corresponding hardware identifier comprised in the certificate. Such verification may be performed upon reception of the certificate, and/or upon retrieval of the certificate from the memory unit, such as at boot or power-on of the hearing device.

The first primary certificate may comprise first primary customer data indicative of the hearing device being configured to operate as a customer hearing device.

The memory unit may have a first secondary certificate stored therein. In other words, the memory unit may comprise a first secondary certificate. The first secondary certificate may comprise a first secondary signature also denoted S_1_2 being a digital signature.

The first secondary certificate may comprise first secondary customer data indicative of the hearing device being configured to operate as a customer hearing device. In other words, first secondary customer data, such as a first secondary customer identifier may be stored in the first secondary certificate.

The first secondary certificate may comprise a BLE identifier also denoted first secondary BLE identifier.

The first secondary certificate may comprise a first secondary hardware identifier. The first secondary hardware identifier may be used for determining if the first secondary certificate is valid, e.g. by comparing the first secondary hardware identifier with a first hardware identifier, e.g. stored in the second part of the memory unit.

The memory unit may have a second primary certificate stored therein. In other words, the memory unit may comprise a second primary certificate. The second primary certificate may comprise a second primary signature also denoted S_2_1 being a digital signature. The second primary certificate may comprise customer data indicative of the hearing device being configured to operate as a customer hearing device. In other words, second primary customer data, such as a second primary customer identifier also denoted CID_2_1 may be stored in the first secondary certificate.

The second primary certificate may comprise a second primary hearing device identifier also denoted HDID_2_1. The second primary certificate may comprise one or more, such as a plurality of, keysets including a second primary keyset and optionally a second secondary keyset.

One or more keysets of the second primary certificate may be used for communication with devices/applications controlled by a customer of the hearing device manufacturer, such as an OEM customer, e.g. in a second domain. The present certificate architecture allows an OEM to keep full control of the use of their hearing devices (in the first domain) and at the same time allows the OEM to assign control rights to an OEM customer (in the second domain).

The second primary keyset may be used for communication with an accessory device and/or a second user application installed and running on the accessory device, such as a smartphone, e.g. an accessory device and/or a second user application controlled by the OEM customer. Thus, the OEM customer or third party may provide and operate his own user application. In other words, the second primary keyset may be an OEM mobile application keyset. The second primary keyset may be used for communication with a second client/tablet/fitting/dispenser device and/or a fitting application installed and running on the second tablet/fitting/dispenser device, such as a tablet, a portable computer, or a stationary computer, wherein the tablet/fitting/dispenser device and/or a fitting application is optionally controlled by the OEM customer. In other words, the second primary keyset may be an OEM tablet/fitting keyset also denoted a (second) fitting device keyset, e.g. configured to secure communication with a third-party tablet/fitting/dispenser device being the third-party entity.

The second primary keyset may comprise a plurality of keys, such as two, three, four, or more keys, and optionally a key identifier. In one or more exemplary hearing devices/methods, the second primary keyset, also denoted KEY_SET_2_1, comprises four keys KEY_2_1_1, KEY_2_1_2, KEY_2_1_3, and KEY_2_1_4. The second primary keyset optionally comprises a second primary key identifier, also denoted KEY_ID_2_1.

The second secondary keyset may comprise a plurality of keys, such as two, three, four, or more keys, and optionally a key identifier. In one or more exemplary hearing devices/methods, the second secondary keyset, also denoted KEY_SET_2_2, comprises four keys KEY_2_2_1, KEY_2_2_2, KEY_2_2_3, and KEY_2_2_4. The second secondary keyset optionally comprises a second secondary key identifier, also denoted KEY_ID_2_2.

The second secondary keyset may be used for communication with a second client/tablet/fitting/dispenser device and/or a fitting application installed and running on the tablet/fitting/dispenser device, such as a tablet, a portable computer, or a stationary computer, wherein the tablet/fitting/dispenser device and/or a fitting application is optionally controlled by the OEM customer. In other words, the second secondary keyset may be an OEM tablet/fitting keyset. The second secondary keyset may be used for communication with a second server device, e.g. controlled by the OEM customer. In other words, the second secondary keyset may be an OEM server/cloud keyset also denoted a third-party server keyset, e.g. configured to secure communication with a third-party server being the third-party entity.

The second primary certificate may comprise a second tertiary keyset. The second tertiary keyset may comprise a plurality of keys, such as two, three, four, or more keys, and optionally a key identifier. In one or more exemplary hearing devices/methods, the second tertiary keyset, also denoted KEY_SET_2_3, comprises four keys KEY_2_3_1, KEY_2_3_2, KEY_2_3_3, and KEY_2_3_4. The second tertiary keyset optionally comprises a second tertiary key identifier, also denoted KEY_ID_2_3.

The second tertiary keyset may be used for communication with a second server device, e.g. controlled by the OEM customer. In other words, the second tertiary keyset may be an OEM server/cloud keyset.

The second primary certificate may comprise a second quaternary keyset. The second primary certificate may comprise a second quinary keyset.

The memory unit may have a second secondary certificate also denoted second model certificate stored therein. In other words, the memory unit may comprise a second secondary certificate. The second secondary certificate may comprise a second secondary signature also denoted S_2_2 being a digital signature. The second secondary certificate may comprise customer data indicative of the hearing device being configured to operate as a customer hearing device. In other words, second secondary customer data, such as a second secondary customer identifier also denoted CID_2_2 may be stored in the second secondary certificate.

The second secondary certificate may comprise a second secondary hardware identifier. The second secondary hardware identifier may be used for determining if the second secondary certificate is valid, e.g. by comparing the second secondary hardware identifier with a first hardware identifier, e.g. stored in the second part of the memory unit.

The memory unit may have second model data stored therein. The second model data may be stored in one or more certificates and/or outside the certificates, i.e. not being a part of the certificates. In other words, the memory unit may comprise the second model data. The second model data may be stored or at least partly stored in the second secondary certificate. In other words, the second secondary certificate may be referred to as a second model certificate. The second model data optionally comprises a second model customer identifier, such as the second secondary customer identifier of the second secondary certificate. In other words, the second secondary customer identifier may be referred to as a second model customer identifier. Second certificates may all have a customer identifier stored thereon facilitating identification of the certificates from the manufacturer perspective and/or enabling more effective debugging.

The second model data optionally comprises second model information data also denoted MID_2 indicative of one or more available models for the hearing device, e.g. such as indicative of one or more available models for the hearing device when the hearing device is configured as a customer hearing device. The second model information data may be or comprise a second model identifier of the second secondary certificate. Thus, the second model certificate/second secondary certificate may comprise the second model information data. Implementation of second model information data in the security architecture enables an OEM customer to configure or assign a specific model or set of available models.

The use of a second secondary hardware identifier in the second secondary certificate together with second model data prevents cloning of the second model data to another hearing device by a mere copying of the second secondary certificate to the other hearing device.

The memory unit may have a second tertiary certificate stored therein. In other words, the memory unit may comprise a second tertiary certificate. The second tertiary certificate may comprise a second tertiary signature also denoted S_2_3 being a digital signature. The second tertiary certificate may comprise customer data indicative of the hearing device being configured to operate as a customer hearing device. In other words, second tertiary customer data, such as a second tertiary customer identifier also denoted CID_2_3 may be stored in the second tertiary certificate.

The memory unit may have a one or more certificate keys stored therein. One or more certificate keys may be stored in the first memory part. One or more certificate keys may be stored in the second memory part. A certificate key may be a public key. A certificate key may be used for verifying a digital signature of one or more certificates stored in the memory unit. A certificate key may be stored in a certificate and optionally used for verifying a signature of another certificate. A certificate key may be used for verifying a signature of one certificate only. In other words, each certificate may have its own certificate key.

The memory unit may have a first primary certificate key stored therein. The first primary certificate key also denoted C_KEY_1_1 may be configured to or used for verifying the first primary signature. The first primary certificate key may be stored in the second memory part.

The processing unit may be configured to verify the first primary certificate e.g. based on the first primary certificate key. The processing unit may be configured to, in accordance with the first primary certificate not being verified, abort normal operation of the hearing device. To verify the first primary certificate may comprise to verify the first primary signature with a certificate key, such as the first primary certificate key C_KEY_ 1_1.

The memory unit may have a first secondary certificate key stored therein. The first secondary certificate key also denoted C_KEY_1_2 may be configured to or used for verifying the first secondary signature. The first secondary certificate key may be stored in the second memory part.

The processing unit may be configured to verify the first secondary certificate. The processing unit may be configured to, in accordance with the first secondary certificate not being verified, abort normal operation of the hearing device. To verify the first secondary certificate may comprise to verify the first secondary signature with a certificate key, such as the first secondary certificate key.

The memory unit may have a second primary certificate key stored therein. The second primary certificate key also denoted C_KEY_2_1 may be configured to or used for verifying the second primary signature. The second primary certificate key may be stored in the first memory part, such as in the second tertiary certificate.

The processing unit may be configured to verify the second primary certificate. The processing unit may be configured to, in accordance with the second primary certificate not being verified, abort normal operation of the hearing device. To verify the second primary certificate may comprise to verify the second primary signature with a certificate key, such as the second primary certificate key.

The memory unit may have a second secondary certificate key stored therein. The second secondary certificate key also denoted C_KEY_2_2 may be configured to or used for verifying the second secondary signature. The second secondary certificate key may be stored in the first memory part, such as in the second tertiary certificate.

The processing unit may be configured to verify the second secondary certificate. The processing unit may be configured to, in accordance with the second secondary certificate not being verified, abort normal operation of the hearing device. To verify the second secondary certificate may comprise to verify the second secondary signature with a certificate key, such as the second secondary certificate key.

The memory unit may have a second tertiary certificate key stored therein. The second tertiary certificate key also denoted C_KEY_2_3 may be configured to or used for verifying the second tertiary signature. The second tertiary certificate key may be stored in the second memory part. The second tertiary certificate key may be stored in the first memory part, such as in the first secondary certificate.

The processing unit may be configured to verify the second tertiary certificate. The processing unit may be configured to, in accordance with the second tertiary certificate not being verified, abort normal operation of the hearing device. To verify the second tertiary certificate may comprise to verify the second tertiary signature with a certificate key, such as the second tertiary certificate key.

The processing unit may be configured to verify second certificate(s) in accordance with a determination that the hearing device is configured to operate as a customer hearing device, e.g. in accordance with the first secondary customer identifier is indicative of the hearing device being configured to operate as a customer hearing device, e.g. if the first secondary customer identifier is different from a manufacturer identifier or if the first secondary customer identifier belongs to a set of customer identifiers stored in the memory unit.

The memory part, such as the second memory part, may have one or more hardware identifiers stored therein. For example, the second memory part may have a first hardware identifier stored therein. The second memory part may have a second hardware identifier stored therein.

The processing unit may be configured to compare the first hardware identifier with the first secondary hardware identifier of the first secondary certificate. The processing unit may be configured to, in accordance with the first hardware identifier not matching the first secondary hardware identifier, abort normal operation of the hearing device.

The processing unit may be configured to compare the first hardware identifier with the second secondary hardware identifier of the second secondary certificate. The processing unit may be configured to, in accordance with the first hardware identifier not matching the second secondary hardware identifier, abort normal operation of the hearing device.

The processing unit may be configured to compare the second hardware identifier with the first primary hardware identifier of the first primary certificate. The processing unit may be configured to, in accordance with the second hardware identifier not matching the first primary hardware identifier, abort normal operation of the hearing device.

The processing unit may be configured to compare the first secondary customer identifier with one or more of the second primary customer identifier, the second secondary customer identifier, and the first tertiary customer identifier. The processing unit may be configured to, in accordance with the first secondary customer identifier being different from one or more of the second primary customer identifier, the second secondary customer identifier, and the first tertiary customer identifier, abort normal operation of the hearing device.

The present disclosure provides an example method for reconfiguring a hearing device. The hearing device is the device disclosed herein, such as device 2B of Fig. 2. Stated differently, the hearing device configuration can be updated so as to switch the legitimate controller of the hearing device (e.g. to a given OEM customer, or a manufacturer).

The method may be performed by a server device of the manufacturer and/or a fitting device. For example, the hearing device can receive the first secondary certificate during service/repair.

The method comprises updating a hearing device configuration of a first secondary certificate. For example, the first secondary certificate comprises a hearing device configuration. The hearing device configuration is indicative of a first configuration of the hearing device or a second configuration of the hearing device. In other words, the hearing device configuration indicates which configuration is to be used at the hearing device amongst a first and second configurations.

In one or more examples, the hearing device configuration comprises a first secondary customer identifier indicative of a customer. In one or more examples, the hearing device configuration comprises a first secondary hearing device identifier and/or a first secondary Bluetooth identifier.

In one or more example methods, updating the hearing device configuration comprises requesting, to a manufacturer server device, permission to update the hearing device configuration. In one or more example methods, updating the hearing device configuration comprises updating one or more of: a first secondary Bluetooth identifier, a first secondary customer identifier, a first secondary hearing device identifier, to indicate a first configuration or a second configuration, by querying a database or look up table storing one or more of: the first secondary Bluetooth identifier, the first secondary customer identifier, the first secondary hearing device identifier, assigned to each hearing device. In other words, for example, the first secondary BLE identifier is updated in the hearing device configuration to indicate to the firmware that the hearing device is to be considered as an OEM customer hearing device or a manufacturer hearing device.

The method comprises digitally signing the first secondary certificate with first primary private key. For example, a digital signature is generated based on the first secondary certificate using the first primary private key and appended to the first secondary certificate to protect its integrity. The signature of the first secondary certificate, e.g. the first secondary signature can be verified using the first secondary certificate key (e.g. a first primary public key associated with the first primary private key) stored in a second part of the memory.

The method comprises transmitting the digitally signed first secondary certificate, e.g. to a hearing device, e.g. for re-purposing the hearing device.

In one or more example methods, the method comprises determining the second primary certificate. In one or more example methods, the second primary certificate comprises a second primary customer identifier. For example, the server device can generate the second primary certificate based on the first primary certificate.

In one or more example methods, the method comprises determining a second secondary certificate. In one or more example methods, the second primary certificate comprises the second secondary customer identifier.

In one or more example methods, the method comprises determining a second tertiary certificate. In one or more example methods, the second tertiary certificate comprises the second customer identifier, and/or second customer key sets.

In one or more example methods, the method comprises transmitting the second secondary certificate and the second tertiary certificate to the hearing device.

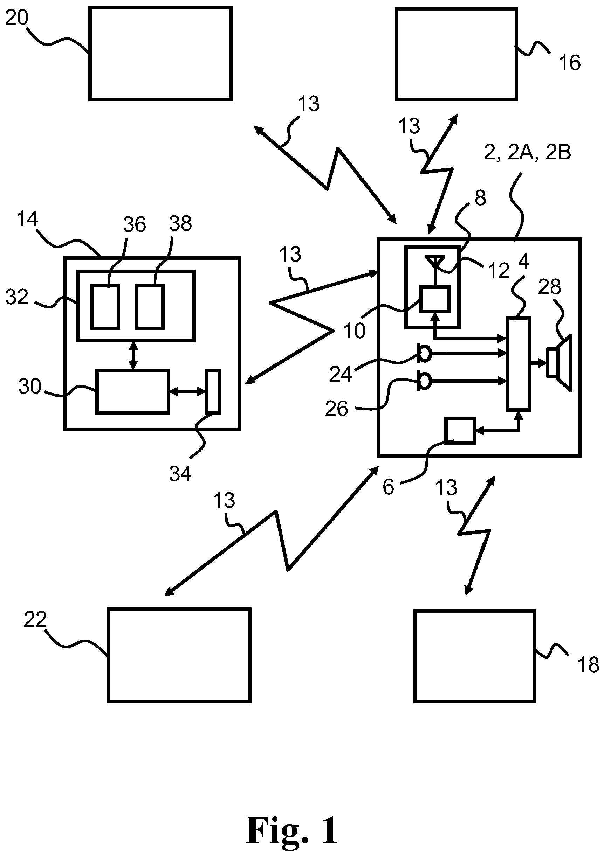

Fig. 1 shows communication between entities in a hearing system comprising a hearing device 2, 2A, 2B, the hearing device 2, 2A, 2B comprising a processing unit 4 configured to compensate for hearing loss of a user of the hearing device; a memory unit 6, and optionally an interface 8. The interface 8 comprises a transceiver 10 and an antenna 12, the interface 8 configured for wireless communication 13, e.g. at frequencies in the range from 2.4 to 2.5 GHz with one or more of an accessory device 14, first client/fitting device 16, second client/fitting device, first server device 20, and second server device 22. The hearing device 2, 2A, 2B comprises one or more microphones including first microphone 24 and optionally second microphone 26. The hearing device 2, 2A, 2B comprises a receiver 28 for converting an electrical output signal from the processing unit 4 to an audio output.

The accessory device 14 comprises a processing unit 30, a memory unit 32 and an interface 34, the memory unit 32 and the interface 34 respectively connected to the processing unit 30. The memory unit may include removable and non-removable data storage units including, but not limited to, Read Only Memory (ROM), Random Access Memory (RAM), etc. The memory unit 30 has a first user application 36 and/or a second user application 38 stored thereon. The interface 34 is configured for wireless communication in one or more frequency ranges, e.g. at frequencies in the frequency range from 2.4 to 2.5 GHz and/or in one or more GSM bands. A first user application 36 and/or a second user application 38 is stored in the memory unit 32 of the accessory device 14.

Fig. 2 shows exemplary hearing devices, such as hearing device 2, 2A, 2B. The hearing device 2, 2A, 2B comprises a processing unit 4 configured to compensate for hearing loss of a user of the hearing device, a memory unit 6, and an interface 8.

The memory unit 6 has stored therein one or more of a first primary certificate 100 optionally comprising a first primary hearing device identifier, a first secondary certificate 102, a second primary certificate 104 optionally comprising a second primary hearing device identifier, a second secondary certificate 106, and a second tertiary certificate 108. The memory unit 6 optionally has stored therein hearing device configuration 110 e.g. as part of the first secondary certificate 102, the hearing device configuration indicative of a first configuration or a second configuration of the hearing device 2.

In one or more exemplary hearing devices, such as hearing device 2, the processing unit 4 is configured to operate, in accordance with the hearing device configuration indicating the first configuration, the hearing device according to the first primary certificate

In one or more exemplary hearing devices, such as hearing device 2, the processing unit 4 is configured to operate, in accordance with the hearing device configuration indicating the second configuration, the hearing device according to the second primary certificate. The first primary certificate 100 may be different from the second primary certificate 104.

In some examples, the first secondary certificate 102 comprises one or more of: a first secondary customer identifier indicative of a customer, a first secondary hearing device identifier, and a first secondary Bluetooth identifier (see Fig. 3). In one or more exemplary hearing devices, the hearing device configuration comprises one or more BLE identifiers, such as a first secondary BLE identifier, and/or one or more customer identifiers indicative of a customer. A BLE identifier is the Bluetooth address of the hearing device. The one or more customer identifiers of the customer data may comprise one or more, such as all, of a first secondary customer identifier, a second primary customer identifier, a second secondary customer identifier, and a second tertiary customer identifier. A customer identifier may comprise a first value and optionally a second value.

In one or more exemplary hearing devices, such as hearing device 2, the memory unit 6 has stored therein the first secondary certificate comprising the first secondary customer identifier and/or a first secondary BLE identifier. The processing unit 4 is optionally configured to determine if the hearing device is configured to operate as a customer hearing device based on hearing device configuration included in the first secondary certificate. In other words, to determine, based on the hearing device configuration (included in the first secondary certificate), if the hearing device 2 is configured to operate as any of :a first customer hearing device, a second customer hearing device, and a manufacturer hearing device.

In one or more example hearing devices, such as hearing device 2, the processing unit 4 is configured to determine if the hearing device configuration 110 indicates the first configuration or the second configuration. For example, the hearing device configuration 110 comprises a Bluetooth identifier, a first secondary hearing device identifier and/or a first secondary customer identifier. For example, any of the Bluetooth identifier, the first secondary hearing device identifier and the first secondary customer identifier indicates if the hearing device is to be operated according to a first configuration and/or a second configuration. In other words, any of the Bluetooth identifier, the first secondary hearing device identifier and the first secondary customer identifier can be checked by the processing unit 4, e.g. by checking a database, and/or a lookup table, providing an association between any of the Bluetooth identifier, the first secondary hearing device identifier and the first secondary customer identifier, and a legitimate controller of the hearing device (such as a given OEM customer, or a manufacturer). For example, the processing unit 4 may be configured to query a look up table or database stored in a server device (e.g. server device 20 or 22 of Fig. 1) that is part of the manufacturer system.

In one or more example hearing devices, such as hearing device 2, the processing unit 4 is configured to determine if the hearing device configuration 110 indicates the first configuration or the second configuration by verifying a first secondary Bluetooth identifier of the hearing device configuration 110. For example, the first secondary Bluetooth identifier is pre-set to a value reserved for an OEM customer hearing device and provided in a database or look up table to be checked by the processing unit 4. For example, the first secondary Bluetooth identifier can be pre-set to a value reserved for manufacturer hearing devices and provided in a database or look up table to be checked by the processing unit 4.

In one or more example hearing devices, such as hearing device 2, the processing unit 4 is configured to abort configuration (e.g. reconfiguration) in accordance with the hearing device configuration 110 does not indicate the first configuration nor the second configuration. For example, when the hearing device configuration 110 does not indicate the first configuration nor the second configuration, the processing unit does not boot to normal mode, but to a service mode that does not offer any processing of sounds like normal mode. For example, in service mode, the processing unit 4 is configured to permit access for service/repair, e.g. to reconfigure the hearing device.

In one or more example hearing devices, such as hearing device 2, the processing unit 4 is configured to determine if the hearing device configuration 110 indicates the first configuration or the second configuration by determining if the first secondary certificate 102 is valid. The verification of the validity of the first secondary certificate 102 is for example performed before operating according to any of the first and second configuration.

In one or more example hearing devices, the processing unit 4 is configured to, in accordance with a determination that the first secondary certificate 102 is not valid, disregard the first secondary certificate 102, and optionally abort the process, and optionally enter service mode. In one or more exemplary hearing devices, aborting the process may comprise aborting normal hearing device operation or putting the hearing device in a repair mode or service mode.

In one or more example hearing devices, determining if the first secondary certificate 102 is valid comprises verifying a signature of the first secondary certificate 102. For example, the first secondary certificate 102 is not valid if the signature of the first secondary certificate 102 is not verified. The first secondary certificate 102 may be verified using a first secondary certificate key, e.g. stored in a second memory part of the memory unit 6.

In one or more example hearing devices, determining if the first secondary certificate 102 is valid comprises comparing the first secondary customer identifier with a second primary customer identifier of the second primary certificate 104, and wherein the first secondary certificate 102 is not valid if the first secondary customer identifier is different from the second primary customer identifier of second primary certificate 104. For example, when the first secondary certificate 102 comprises a first secondary customer identifier, the first secondary customer identifier is compared with a second primary customer identifier of the second primary certificate 104, and wherein the first secondary certificate 102 is not valid if the first secondary customer identifier is different from the second primary customer identifier of second primary certificate 104.

In one or more example hearing devices, determining if the first secondary certificate 102 is valid comprises comparing the first secondary hearing device identifier and a first hearing device identifier stored in a separate part of the memory unit 6 (such as part 7B of Fig. 3), and wherein the first secondary certificate 102 is not valid if the first secondary hearing device identifier is different from the first hearing device identifier. For example the first second hearing device identifier is compared to the first hearing device identifier (e.g. comparing HW_ID_1_2 to HW_ID_1 of Fig. 3) stored in a second part of the memory unit.

In one or more example hearing devices, the processing unit is configured to update firmware based on the first configuration or the second configuration, e.g. when the first secondary certificate 102 is determined to be valid.

Fig. 2 shows an exemplary hearing device 2A comprising a processing unit 4 configured to compensate for hearing loss of a user of the hearing device; an interface 8; and a memory unit 6. The memory unit 6 has stored therein a first primary customer device identifier, e.g. HW_ID_1_2 of first secondary certificate 102. The memory unit 6 has stored therein a first model certificate, e.g. first secondary certificate 102, comprising a first customer identifier, e.g. first secondary customer identifier CID_1_2, see Fig. 3. The memory unit 6 has stored therein second model data, e.g. as part of second secondary certificate 106, comprising a second model customer identifier, e.g. second secondary customer identifier CID_2_2, see Fig. 3, and second model information data, e.g. second model information data MID_2, see Fig. 3 indicative of one or more available models for the hearing device.

Upon determination that the hearing device configuration 110 indicates the second configuration, the processing unit 4 is configured to verify the second model data, such as C_2_2 and/or MID_2. The processing unit 4 is configured to upon successful verification of the second model data, operate the hearing device 2A according to the second model information data, e.g. comprising to operate the hearing device 2A according to the second primary certificate.

In one or more exemplary hearing devices 2A, to verify the second model data comprises to obtain a current model identifier and to compare the current model identifier with the second model information data, e.g. MID_2, see Fig. 3. In one or more exemplary hearing devices 2A, the verification of the second model data is successful when the current model identifier satisfies a model criterion based on the second model information data.

In one or more exemplary hearing devices 2A, to verify the second model data comprises to determine if the second model customer identifier, e.g. CID_2_2, see Fig. 3, corresponds to the first customer identifier, e.g. CID_1_2, see Fig. 3. In one or more exemplary hearing devices, the verification of the second model data is successful when the second model customer identifier corresponds to the first customer identifier.

In one or more exemplary hearing devices, the memory unit 6 has stored therein a second model certificate, e.g. second secondary certificate 106, see Fig. 3, comprising the second model data and a second secondary signature , e.g. S_2_2, see Fig. 3. In one or more exemplary hearing devices, to verify the second model data comprises to verify the second secondary signature , e.g. S_2_2, see Fig. 3. In one or more exemplary hearing devices, the verification of the second model data is successful when the verification of the second secondary signature is successful.

In one or more exemplary hearing devices, the second model data comprising a second customer device identifier, e.g. HW_ID_2_2, see Fig. 3. In one or more exemplary hearing devices, to verify the second model data comprises to determine if the second customer device identifier corresponds to the first primary customer device identifier, e.g. HW_ID_1_2, see Fig. 3. In one or more exemplary hearing devices, the verification of the second model data is successful when the second customer device identifier, e.g. HW_ID_2_2, see Fig. 3, corresponds to the first primary customer device identifier, e.g. HW_ID_1_2, see Fig. 3.

The hearing device 2A is optionally configured to operate as a customer hearing device based on the hearing device configuration 110 indicating a second configuration, e.g. based on the first secondary Bluetooth identifier, and/or the first secondary customer identifier, and/or the first secondary hearing device identifier.

In one or more exemplary hearing devices 2A, the memory unit 6 has stored therein a second key certificate, e.g. second tertiary certificate 108, comprising a second model key, e.g. second secondary certificate key C_KEY_2_2.

In one or more exemplary hearing devices, the second key certificate 108 comprises a second tertiary customer identifier, e.g. CID_2_3, see Fig. 3. In one or more exemplary hearing devices, to verify the second model data comprises to determine if the second model customer identifier corresponds to the second tertiary customer identifier, e.g. if CID_2_2=CID_2_3. In one or more exemplary hearing devices, the verification of the second model data is successful when the second model customer identifier corresponds to the second tertiary customer identifier.

Fig. 2 shows an exemplary hearing device 2B. The hearing device 2B comprises a processing unit 4 configured to compensate for hearing loss of a user of the hearing device, an interface 8; and a memory unit 6. The memory unit 6 has stored therein a first primary certificate 100 comprising a first primary hearing device identifier HDID_1_1, see Fig. 3. The memory unit 6 has stored therein a second primary certificate 104 comprising a second primary hearing device identifier HD_ID_2_1 and second key data, e.g. one or more of KEY_SET_2_1, KEY_SET_2_2, and KEY_SET_2_3, for third-party control of the hearing device 2B. The second key data comprises optionally one or more second keysets including a second primary keyset KEY_SET_2_1.

The processing unit 4 is configured to verify the second primary certificate 104 and in accordance with a successful verification of the second primary certificate, the processing unit 4 is configured to communicate with a third-party entity, e.g. second fitting device 18 and/or second server device 22 based on the second key data.

The processing unit 4 is optionally configured to abort normal hearing device operation, e.g. entering a service mode or repair mode and/or forgoing compensating for hearing loss of the user and/or switching the hearing device off, in accordance with a failure in verifying the second primary certificate 104.

In one or more exemplary hearing devices, the second primary keyset KEY_SET_2_1 is a fitting device keyset configured to secure communication with a fitting device being the third party entity. The second primary keyset comprises a second primary key identifier and/or one or more second primary keys.

In one or more exemplary hearing devices, the one or more second key sets include a second secondary keyset KEY_SET_2_2, wherein optionally the second secondary keyset or a second tertiary keyset is a third-party server keyset configured to secure communication with a third-party server being the third-party entity. In hearing device 2B, to verify the second primary certificate optionally comprises to verify the second primary hearing device identifier e.g. based on the first primary hearing device identifier. Thus reuse of the second primary certificate in other hearing devices is prevented.

In one or more exemplary hearing devices 2B, the memory unit 6 has stored therein a second primary certificate key and to verify the second primary certificate 104 optionally comprises to verify a second primary signature of the second primary certificate 104 based on the second primary certificate key.

In hearing device 2B, to verify the second primary certificate optionally comprises to verify a second primary customer identifier of the second primary certificate, e.g. based on first secondary customer identifier. Thus reuse of the second primary certificate 104 in for different customers is prevented.

In one or more exemplary hearing devices 2B, to communicate with a third-party entity 18, 22 based on the second key data comprises to verify communication data based on the second primary keyset.

In one or more exemplary hearing devices 2B, to communicate with a third-party entity 18, 22 based on the second key data comprises to verify communication data based on the second secondary keyset.

In one or more exemplary hearing devices 2B, to communicate with a third-party entity based on the second key data comprises to apply, such as one or more of run, deploy, install, operate according to, and store in memory unit, a third-party operating system in the processing unit 4.

Fig. 3 shows an exemplary memory unit of a hearing device, such as hearing device 2, 2A, 2B.

The memory unit 6 has stored therein one or more of a first primary certificate 100, a first secondary certificate 102, a second primary certificate 104, a second secondary certificate 106, and a second tertiary certificate 108. The certificates 100, 102, 104, 106, 108 are optionally stored in a first part 7A of the memory unit, the first part 7A being a writeable part of the memory unit.

The first primary certificate 100 comprises a first primary signature S_1_1 being a digital signature. The first primary signature S_1_1 may be verified or verifiable by a first primary certificate key C_KEY_1_1 optionally comprised in a second part 7B of the memory unit 6. The second part 7B of the memory unit 6 is locked and/or write-protected. The second part 7B of the memory unit 6 comprises one or more of: the first primary certificate key C_KEY_1_1, a first secondary certificate key C_KEY_1_2 (which may be used for verifying the first secondary signature S_1_2 of the first secondary certificate), a first tertiary certificate key C_KEY_1_3 (which may be used to verify second tertiary signature S_2_3 of the second tertiary certificate 108), and a first quaternary certificate key C_KEY_1_4 (which may be used for R&D purposes).

The first primary certificate 100 comprises a first primary hearing device identifier HDID_1_1. The first primary hearing device identifier may uniquely identify the hearing device. The first primary certificate 100 comprises one or more keysets including a first primary keyset KEY_SET_1_1, a first secondary keyset KEY_SET_1_2, and a first tertiary keyset KEY_SET_1_3. The first primary certificate 100 optionally comprises a first quaternary keyset KEY_SET_1_4 and/or first quinary keyset KEY_SET_1_5. The first primary certificate 100 optionally comprises a first primary hardware identifier HW_ID_1_1. The hearing device may be configured to compare the first primary hardware identifier HW_ID_1_1 with a second hardware identifier HD_ID_2 stored in the second part 7B of the memory unit 6, e.g. during start-up or booting of the hearing device and/or as part of determining if the first primary certificate 100 is valid.

The hearing device is configured for secure communication with a first user application/accessory device using the first primary keyset KEY_SET_1_1 and optionally for secure communication with a first client/fitting device using the first secondary keyset KEY_SET_1_2. The hearing device is optionally configured for secure communication with a first server device using the first tertiary keyset KEY_SET_1_3. The hearing device may be configured for secure communication with a first primary wireless communication device using the first quaternary keyset KEY_SET_1_4. The hearing device may be configured for secure communication with a first secondary wireless communication device using the first quinary keyset KEY_SET_1_5. The first keysets KEY_SET_1_1, KEY_SET_1_2, KEY_SET_1_3, KEY_SET_1_4, and KEY_SET_1_5 may be used for communication with devices/applications controlled by the manufacturer of the hearing device, e.g. in a first domain and/or a second domain.

The first keysets KEY_SET_1_1, KEY_SET_1_2, KEY_SET_1_3, KEY_SET_1_4, and KEY_SET_1_5 each comprises a plurality of keys and a key identifier indicative of one of the keys in the respective keyset.

The memory unit 6 may have a first secondary certificate 102 stored therein. The first secondary certificate 102 may comprise a first secondary signature S_1_2 being a digital signature. The first secondary signature S_1_2 of the first secondary certificate 102 is for example verifiable using the first secondary certificate key C_KEY_1_2 stored in part 7B of the memory unit 6.

The first secondary certificate 102 may comprise hearing device configuration indicative of a first configuration of the hearing device or a second configuration of the hearing device. In other words, the hearing device configuration comprises a first secondary customer identifier CID_1_2 and/or a first secondary Bluetooth identifier BLE_ID_1_2 such as a first secondary customer identifier may be stored in the first secondary certificate 102.

The first secondary certificate 102 optionally comprises a first secondary hearing device identifier, such as a first secondary hardware identifier HW_ID_1_2. The hearing device may be configured to compare the first secondary hardware identifier HW_ID_1_2 with a first hardware identifier HW_ID_1 stored in the second part 7B of the memory unit 6, e.g. during start-up or booting of the hearing device and/or as part of determining if the first secondary certificate 102 is valid.

The memory unit 6 has a second primary certificate 104 stored therein. The second primary certificate 104 comprises a second primary signature S_2_1 being a digital signature. The second primary signature S_2_1 may be verified or verifiable by a second primary certificate key C_KEY_2_1 optionally comprised in the second tertiary certificate 108 of the first part 7A of the memory unit 6.

The second primary certificate 104 comprises a second primary hearing device identifier HDID_2_1. The second primary hearing device identifier HDID_2_1 may uniquely identify the hearing device. The second primary certificate 104 comprises one or more keysets including a second primary keyset KEY_SET_2_1, a second secondary keyset KEY_SET_2_2, and a second tertiary keyset KEY_SET_2_3. The second primary certificate 104 optionally comprises customer data in the form of a second primary customer identifier CID_2_1. The hearing device may be configured to compare the second primary customer identifier CID_2_1 with one or more other customer identifiers, such as CID_1_2, CID_2_2 and CID_2_3, e.g. during start-up or booting of the hearing device and/or as part of determining if the second primary certificate 104 is valid.

The hearing device is configured for secure communication with a second user application/accessory device using the second primary keyset KEY_SET_2_1 and optionally for secure communication with a second client/fitting device using the second secondary keyset KEY_SET_2_2. The hearing device is optionally configured for secure communication with a second server device using the second tertiary keyset KEY_SET_2_3. The second keysets KEY_SET_2_1, KEY_SET_2_2, KEY_SET_2_3 may be used for communication with devices/applications controlled by the third party/OEM customer, e.g. in a second domain.

The second keysets KEY_SET_1_1, KEY_SET_1_2, KEY_SET_1_3, KEY_SET_1_4, and KEY_SET_1_5 each comprises a plurality of keys and a key identifier indicative of one of the keys in the respective keyset.

The memory unit 6 may have a second secondary certificate 106 stored therein. In other words, the memory unit may comprise a second secondary certificate 106. The second secondary certificate may comprise a second secondary signature also denoted S_2_2 being a digital signature. The second secondary signature S_2_2 may be verified or verifiable by a second secondary certificate key C_KEY_2_2 optionally comprised in the second tertiary certificate 108 of the first part 7A of the memory unit 6.

The second secondary certificate 106 may comprise customer data indicative of the hearing device being configured to operate as a customer hearing device. In other words, second secondary customer data, such as a second secondary customer identifier CID_2_2 may be stored in the second secondary certificate 106.

The second secondary certificate 106 may comprise a second secondary hardware identifier HW_ID_2_2. The second secondary hardware identifier HW_ID_2_2 may be used for determining if the second secondary certificate 106 is valid, e.g. by comparing the second secondary hardware identifier HW_ID_2_2 with a first hardware identifier HW_ID_1, e.g. stored in the second part 7B of the memory unit 6. The second secondary hardware identifier may be used as second customer device identifier.

The memory unit 6 optionally has second model data stored therein. The second model data may be stored in the second secondary certificate 106. In other words, the second secondary certificate may function as a second model certificate. In other words, the memory unit may comprise the second model data. The second model data optionally comprises a second model customer identifier. The second secondary customer identifier CI_2_2 of the second secondary certificate 106 may function as the second model customer identifier.

The second model data optionally comprises second model information data also denoted MID_2 indicative of one or more available models for the hearing device, e.g. such as indicative of one or more available models for the hearing device when the hearing device is configured as a customer hearing device. The second model information data MID_2 is optionally included in the second secondary certificate 106 and may be or comprise a second model identifier of the second secondary certificate. Thus, the second model certificate/second secondary certificate 106 may comprise the second model information data MID_2.

The memory unit 6 may have a second tertiary certificate 108 stored therein. In other words, the memory unit 6 may comprise a second tertiary certificate 108. The second tertiary certificate 108 may comprise a second tertiary signature S_2_3 being a digital signature. The second tertiary signature S_2_3 may be verified or verifiable by a second tertiary certificate key C_KEY_2_3 optionally comprised in the second part 7B of the memory unit 6.

The second tertiary certificate may comprise customer data indicative of the hearing device being configured to operate as a customer hearing device. In other words, second tertiary customer data, such as a second tertiary customer identifier CID_2_3 may be stored in the second tertiary certificate 108. The hearing device may be configured to compare the second tertiary customer identifier CID_2_3 with one or more other customer identifiers, such as CID_1_2, CID_2_1 and CID_2_2, e.g. during start-up or booting of the hearing device and/or as part of determining if the second tertiary certificate 108 is valid and/or determining if the hearing device is a customer hearing device.

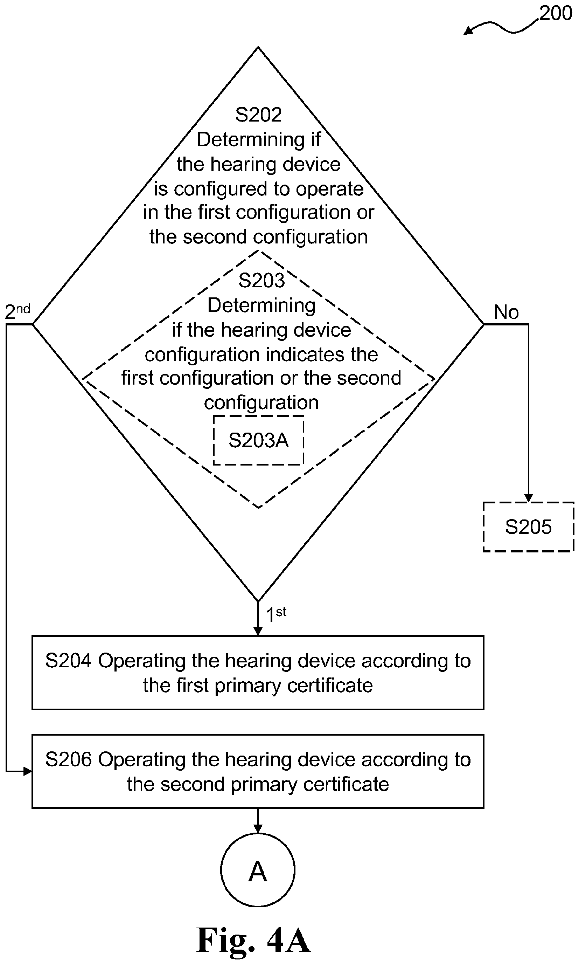

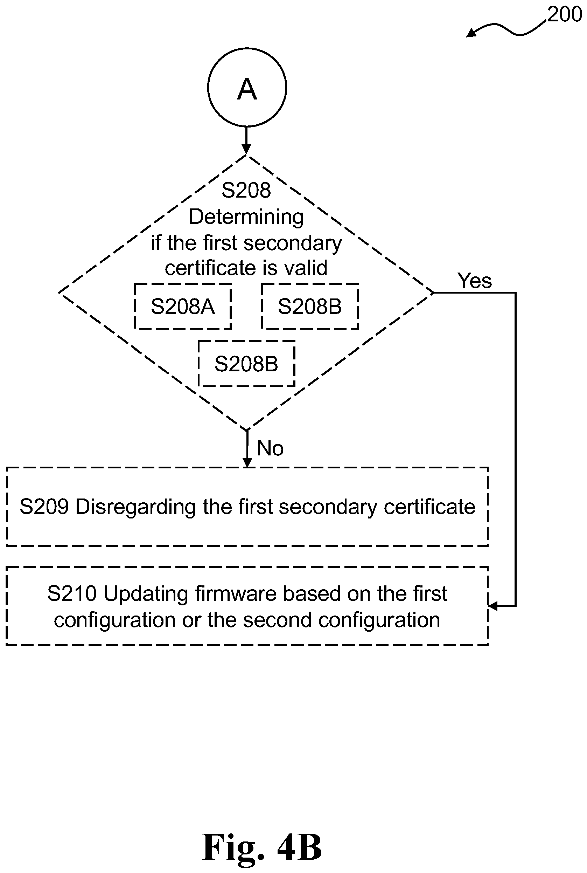

Figs. 4A-4B show a flow diagram of an example method 200, for operating a hearing device. The hearing device is the device disclosed herein, such as device 2, 2A, 2B of Figs. 1-2, , the hearing device comprising a first primary certificate, a first secondary certificate, and a second primary certificate stored in a memory unit of the hearing device.

The first primary certificate comprises a first primary hearing device identifier. The second primary certificate comprises a second primary hearing device identifier.

The first secondary certificate comprises a hearing device configuration indicative of a first configuration of the hearing device or a second configuration of the hearing device.

The first primary certificate is optionally different from the second primary certificate. For example, a first primary keyset of the first primary certificate may be different from a second primary keyset of the second primary certificate and/or a first secondary keyset of the first primary certificate may be different from a second secondary keyset of the second primary certificate. A first tertiary keyset of the first primary certificate may be different from a second tertiary keyset of the second primary certificate.

The first primary certificate is optionally different from the first secondary certificate, e.g. as illustrated in Fig. 3.

In one or more example methods, the hearing device configuration comprises a first secondary customer identifier indicative of a customer.

In one or more example methods, the hearing device configuration comprises a first secondary hearing device identifier and/or a first secondary Bluetooth identifier.

The method 200 comprises determining S202, e.g. based on the hearing device configuration, if the hearing device is configured to operate in the first configuration or the second configuration. In one or more example methods, determining S202 comprises determining S203 if the hearing device configuration indicates the first configuration or the second configuration. In one or more example methods, determining S203 if the hearing device configuration indicates the first configuration or the second configuration comprising verifying S203A a first secondary Bluetooth identifier of the hearing device configuration, e.g. by querying a database and/or a lookup table.

In one or more example methods, determining S202 comprises determining based on the first secondary customer identifier, the first secondary hearing device identifier, and/or the first secondary Bluetooth identifier, if the hearing device is configured to operate in the first configuration or the second configuration.

The method 200 comprises operating S204 the hearing device according to the first primary certificate in accordance with a determination that the hearing device is configured to operate using the first configuration. In one or more example methods, in the first configuration, the hearing device is configured to operate as a manufacturer hearing device based on the first primary certificate. Stated differently, the hearing device configuration can be updated so as to switch the legitimate controller of the hearing device (e.g. to a given OEM customer, or a manufacturer).

The method 200 comprises operating S206 the hearing device according to the second primary certificate, in accordance with a determination that the hearing device is configured to operate using the second configuration. In one or more example methods, in the second configuration, the hearing device is configured to operate as a customer hearing device (e.g. as a first customer hearing device for a first OEM customer, or a second customer hearing device for a second OEM customer different from the first OEM customer) based on the second primary certificate.

In one or more example methods, the method 200 comprises aborting S205 configuration in accordance with the hearing device configuration does not indicate the first configuration nor the second configuration.

In one or more example methods, the method 200 comprises determining S208 if the first secondary certificate is valid.

In one or more example methods, in accordance with a determination that the first secondary certificate is not valid, the method 200 comprises disregarding S209 the first secondary certificate.

In one or more example methods, determining S208 if the first secondary certificate is valid comprises verifying S208A a signature of the first secondary certificate, e.g. using the first secondary certificate key stored in a second part of the memory unit.

In one or more example methods, the first secondary certificate is not valid if the signature of the first secondary certificate is not verified.

In one or more example methods, the first secondary certificate comprises a first secondary customer identifier.

In one or more example methods, determining S208 if the first secondary certificate is valid comprises comparing S208B the first secondary customer identifier CID_1_2 with a second primary customer identifier CID_2_1 of the second primary certificate.

In one or more example methods, the first secondary certificate is not valid if the first secondary customer identifier is different from the second primary customer identifier of second primary certificate.

In one or more example methods, determining S208 if the first secondary certificate is valid comprises comparing S208C the first secondary hearing device identifier (e.g. HW_ID_1_2) and a first hearing device identifier (e.g. HW_ID_1) stored in a separate part of the memory unit.

In one or more example methods, the first secondary certificate is not valid if the first secondary hearing device identifier is different from the first hearing device identifier.

In one or more example methods, the method 200 comprises updating S210 firmware based on the first configuration or the second configuration.

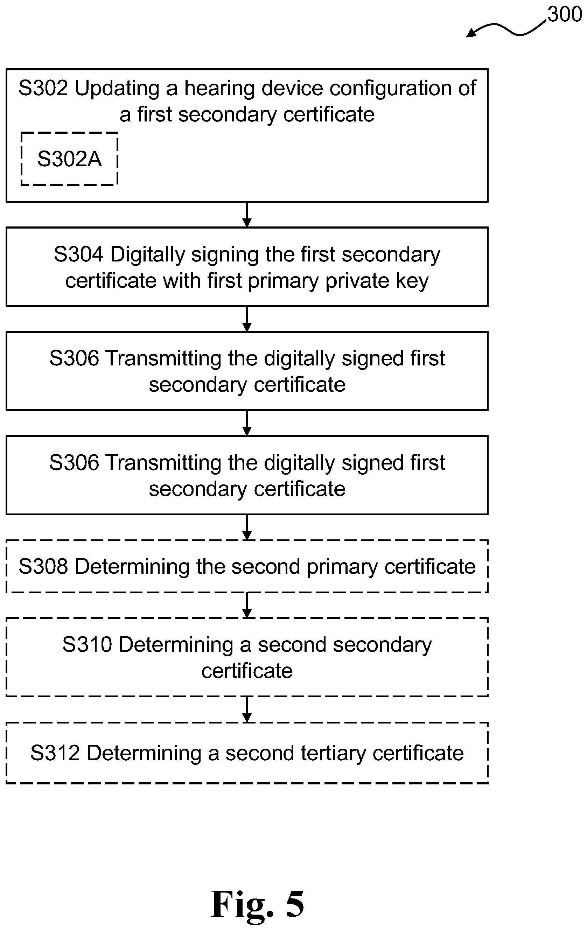

Fig. 5 shows a flow diagram of an example method 300, for reconfiguring a hearing device, e.g. re-purposing a hearing device. The hearing device is the device disclosed herein, such as device 2, 2A, 2B of Fig. 2. The method 300 may be performed by a server device of a manufacturer, and/or a fitting device.

The method 300 comprises updating S302 a hearing device configuration of a first secondary certificate. In one or more example methods, updating S302 the hearing device configuration comprises requesting S302A, to a manufacturer server device, permission to update the hearing device configuration. In one or more example methods, updating (e.g. modifying, changing, editing) the hearing device configuration comprises updating one or more of: a first secondary Bluetooth identifier, a first secondary customer identifier, a first secondary hearing device identifier, to indicate a first configuration or a second configuration, e.g., by querying a database or look up table storing one or more of: the first secondary Bluetooth identifier, the first secondary customer identifier, the first secondary hearing device identifier, assigned to each hearing device.

In other words, for example, the first secondary BLE identifier (and/or the first secondary customer identifier, and/or the first secondary hearing device identifier) is updated in the hearing device configuration to indicate to the firmware that the hearing device is to be considered as an OEM customer hearing device of a new OEM customer or a manufacturer hearing device. The present disclosure allows updating, changing, modifying the configuration of the hearing device to provide control to a new legitimate controller, e.g. for a new domain. Stated differently, the hearing device configuration can be updated so as to switch the legitimate controller of the hearing device (e.g. to a given OEM customer, or a manufacturer).

The method 300 comprises digitally signing S304 the first secondary certificate with first primary private key. For example, a digital signature is generated based on the first secondary certificate using the first primary private key and appended to the first secondary certificate to protect its integrity.

The method 300 comprises transmitting S306 the digitally signed first secondary certificate, e.g. to a hearing device.

In one or more example methods, the method 300 comprises determining S308 the second primary certificate.

In one or more example methods, the second primary certificate comprising a second primary customer identifier.

In one or more example methods, the method 300 comprises determining S310 a second secondary certificate. In one or more example methods, the second primary certificate comprising a second secondary customer identifier. The second secondary customer identifier may be the same as a second primary customer identifier.

In one or more example methods, the method 300 comprises determining S312 a second tertiary certificate. In one or more example methods, the second tertiary certificate comprising the second customer identifier, second customer key sets.

In one or more example methods, the method 300 comprises transmitting the second secondary certificate and the second tertiary certificate to the hearing device.

In one or more examples, the second secondary certificate and the second tertiary certificate can be digitally signed as illustrated in Fig. 3.

Embodiments of methods and products (hearing devices) according to the disclosure are set out in the following items:
Item 1. A hearing device comprising
   a processing unit configured to compensate for hearing loss of a user of the hearing device; and
   a memory unit,

   wherein the memory unit has stored therein:
      a first primary certificate comprising a first primary hearing device identifier;
      a second primary certificate comprising a second primary hearing device identifier; and
      a first secondary certificate comprising a hearing device configuration indicative of a first configuration of the hearing device or a second configuration of the hearing device; and
   wherein the processing unit is configured to:
      operate, in accordance with the hearing device configuration indicating the first configuration, the hearing device according to the first primary certificate; and
      operate, in accordance with the hearing device configuration indicating the second configuration, the hearing device according to the second primary certificate.
Item 2. Hearing device according to item 1, wherein the hearing device configuration comprises a first secondary customer identifier indicative of a customer.
Item 3. Hearing device according to any of the previous items, wherein the hearing device configuration comprises a first secondary hearing device identifier and/or a first secondary Bluetooth identifier.
Item 4. Hearing device according to any of the previous items, wherein the processing unit is configured to determine if the hearing device configuration indicates the first configuration or the second configuration.
Item 5. Hearing device according to any of items 3-4, wherein the processing unit is configured to determine if the hearing device configuration indicates the first configuration or the second configuration by verifying a first secondary Bluetooth identifier of the hearing device configuration.
Item 6. Hearing device according to any of items 4-5, wherein the processing unit is configured to abort configuration in accordance with the hearing device configuration does not indicate the first configuration nor the second configuration.
Item 7. Hearing device according to any of the previous items, wherein in the first configuration, the hearing device is configured to operate as a manufacturer hearing device based on the first primary certificate;
Item 8. Hearing device according to any of the previous items, wherein in the second configuration, the hearing device is configured to operate as a customer hearing device based on the second primary certificate.
Item 9. Hearing device according to any of items 4-8, wherein the processing unit is configured to determine if the hearing device configuration indicates the first configuration or the second configuration by determining if the first secondary certificate is valid, and wherein the processing unit is configured to, in accordance with a determination that the first secondary certificate is not valid, disregard the first secondary certificate.
Item 10. Hearing device according to item 9, wherein determining if the first secondary certificate is valid comprises verifying a signature of the first secondary certificate and wherein the first secondary certificate is not valid if the signature of the first secondary certificate is not verified.
Item 11. Hearing device according to any of items 9-10 as dependent on item 2, wherein determining if the first secondary certificate is valid comprises comparing the first secondary customer identifier with a second primary customer identifier of the second primary certificate, and wherein the first secondary certificate is not valid if the first secondary customer identifier is different from the second primary customer identifier of second primary certificate.
Item 12. Hearing device according to any of items 9-11 as dependent on item 3, wherein determining if the first secondary certificate is valid comprises comparing the first secondary hearing device identifier and a first hearing device identifier stored in a separate part of the memory unit, and wherein the first secondary certificate is not valid if the first secondary hearing device identifier is different from the first hearing device identifier.
Item 13. Hearing device according to any of the previous items, wherein the processing unit is configured to update firmware based on the first configuration or the second configuration.
Item 14. A method for operating a hearing device, wherein the hearing device comprises a memory unit, wherein the memory unit has stored therein:
   a first primary certificate comprising a first primary hearing device identifier;
   a second primary certificate comprising a second primary hearing device identifier; a first secondary certificate comprising a hearing device configuration indicative of a first configuration of the hearing device or a second configuration of the hearing device, the method comprising:
   determining if the hearing device is configured to operate in the first configuration or the second configuration; and
   in accordance with a determination that the hearing device is configured to operate using the first configuration, operating the hearing device according to the first primary certificate; and
   in accordance with a determination that the hearing device is configured to operate using the second configuration, operating the hearing device according to the second primary certificate.
Item 15. Method according to item 14, wherein the hearing device configuration comprises a first secondary customer identifier indicative of a customer.
Item 16. Method according to any of items 14-15, wherein the hearing device configuration comprises a first secondary hearing device identifier and/or a first secondary Bluetooth identifier.
Item 17. Method according to any of items 14-16, wherein determining if the hearing device is configured to operate in the first configuration or the second configuration comprises determining if the hearing device configuration indicates the first configuration or the second configuration.
Item 18. Method according to any of items 16-17, wherein determining if the hearing device configuration indicates the first configuration or the second configuration comprising verifying a first secondary Bluetooth identifier of the hearing device configuration.
Item 19. A method for reconfiguring a hearing device, the method comprising:
   - updating a hearing device configuration of a first secondary certificate;
   - digitally signing the first secondary certificate with first primary private key,
   - transmitting the digitally signed first secondary certificate.
Item 20. Method according to item 19, wherein updating the hearing device configuration comprises requesting, to a manufacturer server device, permission to update the hearing device configuration.
Item 21 Method according to any of items 19-20, the method comprising: determining the second primary certificate, the second primary certificate comprising a second primary customer identifier,
Item 22. Method according to any of items 19-21, the method comprising: determining a second secondary certificate, the second secondary certificate comprising a second secondary customer identifier.
Item 23. Method according to any of items 19-22, the method comprising: determining a second tertiary certificate, the second tertiary certificate comprising the second customer identifier, and second customer key sets.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It may be appreciated that Figs. 1-5 comprise some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The exemplary operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

The various exemplary methods, devices, and systems described herein are described in the general context of method steps processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

### LIST OF REFERENCES

- 2, 2A, 2B: hearing device
- 4: processing unit of hearing device
- 6: memory unit of hearing device
- 7A: first part of memory unit
- 7B: second part of memory unit
- 8: interface of hearing device
- 10: transceiver, radio transceiver
- 12: antenna
- 13: wireless communication
- 14: accessory device
- 16: first client device, first fitting device
- 18: second client device, second fitting device
- 20: first server device, manufacturer server device
- 22: second server device, third-party server device
- 24: first microphone
- 26: second microphone
- 28: receiver
- 30: processing unit of accessory device
- 32: memory unit of accessory device
- 34: interface of accessory device
- 36: first user application installed and operating on the accessory device
- 38: second user application installed and operating on the accessory device
- 100: first primary certificate
- 102: first secondary certificate
- 104: second primary certificate
- 106: second secondary certificate
- 108: second tertiary certificate
- 110: hearing device configuration
- 200: method for operating a hearing device
- S202: determining if the hearing device is configured to operate in the first configuration or the second configuration
- S203: determining if the hearing device configuration indicates the first configuration or the second configuration
- S204: operating the hearing device according to the first primary certificate
- S205: aborting the configuration
- S206: operating the hearing device according to the second primary certificate
- S208: determining if the first secondary certificate is valid
- S209: disregarding the first secondary certificate
- S210: updating firmware based on the first configuration or the second configuration
- 300: method for reconfiguring a hearing device
- S302: updating a hearing device configuration of a first secondary certificate
- S304: digitally signing the first secondary certificate with first primary private key
- S306: transmitting the digitally signed first secondary certificate
- S308: determining the second primary certificate
- S310: determining the second secondary certificate
- S312: determining the second tertiary certificate
- CID_1_2: first secondary customer identifier
- CID_2_1: second primary customer identifier
- CID_2_2: second secondary customer identifier
- CID_2_3: second tertiary customer identifier
- C_KEY_1_1: first primary certificate key
- C_KEY_1_2: first secondary certificate key
- C_KEY_1_3: first tertiary certificate key
- C_KEY_1_4: first quaternary certificate key
- C_KEY_2_1: second primary certificate key
- C_KEY_2_2: second secondary certificate key
- C_KEY_2_3: second tertiary certificate key
- HIID_1_1: first primary hearing device identifier
- HIID_2_1: second primary hearing device identifier
- HW_ID_1: first hardware identifier
- HW_ID_1_1: first primary hardware identifier
- HW_ID_1_2: first secondary hardware identifier
- HW_ID_2: second hardware identifier
- HW_ID_2_2: second secondary hardware identifier
- KEY_SET_1_1: first primary keyset
- KEY_SET_1_2: first secondary keyset
- KEY_SET_1_3: first tertiary keyset
- KEY_SET_1_4: first quaternary keyset
- KEY_SET_1_5: first quinary keyset
- KEY_SET_2_1: second primary keyset
- KEY_SET_2_2: second secondary keyset
- KEY_SET_2_3: second tertiary keyset
- MID_2: second model information data
- S_1_1: first primary signature
- S_1_2: first secondary signature
- S_2_1: second primary signature
- S_2_2: second secondary signature
- S_2_3: second tertiary signature

## Claims

1. A hearing device comprising
a processing unit configured to compensate for hearing loss of a user of the hearing device; and
a memory unit,
wherein the memory unit has stored therein:
a first primary certificate comprising a first primary hearing device identifier;
a second primary certificate comprising a second primary hearing device identifier; and
a first secondary certificate comprising a hearing device configuration indicative of a first configuration of the hearing device or a second configuration of the hearing device; and
wherein the processing unit is configured to:
operate, in accordance with the hearing device configuration indicating the first configuration, the hearing device according to the first primary certificate; and
operate, in accordance with the hearing device configuration indicating the second configuration, the hearing device according to the second primary certificate.

2. Hearing device according to claim 1, wherein the hearing device configuration comprises a first secondary customer identifier indicative of a customer.

3. Hearing device according to any of the previous claims, wherein the hearing device configuration comprises a first secondary hearing device identifier and/or a first secondary Bluetooth identifier.

4. Hearing device according to any of the previous claims, wherein the processing unit is configured to determine if the hearing device configuration indicates the first configuration or the second configuration.

5. Hearing device according to any of claims 3-4, wherein the processing unit is configured to determine if the hearing device configuration indicates the first configuration or the second configuration by verifying a first secondary Bluetooth identifier of the hearing device configuration.

6. Hearing device according to any of claims 4-5, wherein the processing unit is configured to abort configuration in accordance with the hearing device configuration does not indicate the first configuration nor the second configuration.

7. Hearing device according to any of the previous claims, wherein in the first configuration, the hearing device is configured to operate as a manufacturer hearing device based on the first primary certificate;

8. Hearing device according to any of the previous claims, wherein in the second configuration, the hearing device is configured to operate as a customer hearing device based on the second primary certificate.

9. Hearing device according to any of claims 4-8, wherein the processing unit is configured to determine if the hearing device configuration indicates the first configuration or the second configuration by determining if the first secondary certificate is valid, and wherein the processing unit is configured to, in accordance with a determination that the first secondary certificate is not valid, disregard the first secondary certificate.

10. Hearing device according to claim 9, wherein determining if the first secondary certificate is valid comprises verifying a signature of the first secondary certificate and wherein the first secondary certificate is not valid if the signature of the first secondary certificate is not verified.

11. Hearing device according to any of claims 9-10 as dependent on claim 2, wherein determining if the first secondary certificate is valid comprises comparing the first secondary customer identifier with a second primary customer identifier of the second primary certificate, and wherein the first secondary certificate is not valid if the first secondary customer identifier is different from the second primary customer identifier of second primary certificate.

12. Hearing device according to any of claims 9-11 as dependent on claim 3, wherein determining if the first secondary certificate is valid comprises comparing the first secondary hearing device identifier and a first hearing device identifier stored in a separate part of the memory unit, and wherein the first secondary certificate is not valid if the first secondary hearing device identifier is different from the first hearing device identifier.

13. Hearing device according to any of the previous claims, wherein the processing unit is configured to update firmware based on the first configuration or the second configuration.

14. A method for operating a hearing device, wherein the hearing device comprises a memory unit, wherein the memory unit has stored therein:
a first primary certificate comprising a first primary hearing device identifier;
a second primary certificate comprising a second primary hearing device identifier; a first secondary certificate comprising a hearing device configuration indicative of a first configuration of the hearing device or a second configuration of the hearing device, the method comprising:
determining if the hearing device is configured to operate in the first configuration or the second configuration; and
in accordance with a determination that the hearing device is configured to operate using the first configuration, operating the hearing device according to the first primary certificate; and
in accordance with a determination that the hearing device is configured to operate using the second configuration, operating the hearing device according to the second primary certificate.

15. Method according to claim 14, wherein the hearing device configuration comprises a first secondary customer identifier indicative of a customer, and/or a first secondary hearing device identifier and/or a first secondary Bluetooth identifier.
